# EUROPÄISCHE PATENTSCHRIFT

(11) **EP 3 177 656 B1**
(45) Veröffentlichungstag und Bekanntmachung des Hinweises auf die Patenterteilung: **16.01.2019**
(21) Anmeldenummer: 15715189.5
(22) Anmeldetag: 26.03.2015
(51) Int. Cl.: C08G 18/08, C08G 18/10, C08G 18/12, D06M 15/564, D06N 3/14

(54) **POLYURETHANHARNSTOFFLÖSUNGEN FÜR TEXTILBESCHICHTUNGEN**
POLYURETHANE UREA SOLUTIONS FOR TEXTILE COATINGS
SOLUTIONS DE POLYURÉTHANE POUR REVÊTEMENTS TEXTILES

(30) Priorität: 05.08.2014 EP 14179784
(43) Veröffentlichungstag der Anmeldung: 14.06.2017
(73) Patentinhaber: Covestro Deutschland AG, 51373 Leverkusen (DE)
(72) Erfinder: DÖRR, Sebastian, 40593 Düsseldorf (DE); VIALA, Sophie, 50935 Köln (DE); MICHAELIS, Thomas, 51375 Leverkusen (DE)
(74) Vertreter: Levpat
(86) Internationale Anmeldenummer: PCT/EP2015/056572
(87) Internationale Veröffentlichungsnummer: WO 2016/020074

(56) Entgegenhaltungen:
- WO-A1-2006/089648
- US-A- 3 609 112
- US-A- 3 904 796
- US-A- 3 912 680

## Beschreibung

Die vorliegende Erfindung betrifft ein Verfahren zur Beschichtung von Textilien und/oder Leder, bei dem eine Polyurethanharnstofflösung eingesetzt wird, sowie eine nach diesem Verfahren erhältliche Textil- oder Lederbeschichtung. Ein weiterer Gegenstand der Erfindung ist ein spezieller gelöster Polyurethanharnstoff und die Verwendung dieses Polyurethanharnstoffs zur Beschichtung von Substraten und zur Herstellung freier Filme.

Die Beschichtung von textilen Materialien und Leder mit Polyurethansystemen gehört zum Stand der Technik. Man unterscheidet hierbei wässrige Polyurethandispersionen und lösemittelhaltige Systeme.

Die wässrigen Polyurethansysteme decken ein großes Anwendungsgebiet ab und haben den Vorteil, im Wesentlichen auf flüchtige organische Substanzen verzichten zu können. Aufgrund ihres notwendigerweise hydrophilen Charakters besitzen entsprechende Beschichtungen allerdings eine geringere Wasserbeständigkeit als die entsprechenden, aus organischen Lösungen hergestellten Polyurethanbeschichtungen, da die hydrophilierenden Gruppen in dem Beschichtungsfilm verbleiben. Zur Herstellung von Beschichtungen mit guter Wasserbeständigkeit sind daher Polyurethansysteme aus organischen Lösemitteln den wässrigen Systemen vorzuziehen.

Polyurethanharnstoff-Beschichtungen auf Basis organischer Lösemittel sind bei Anwendern aufgrund ihrer Härte, Elastizität und Beständigkeit sehr geschätzt. Solche Systeme werden hergestellt, indem Diisocyanat mit linearen Makrodiolen (Polyether-, Polyester- oder Polycarbonatdiole) zu einem Präpolymer umgesetzt und danach durch Umsetzung mit Diaminen als Kettenverlängerer auf das erforderliche Molgewicht einstellt werden. Die so hergestellten Polyurethanharnstofflösungen, neigen aufgrund ihrer Struktur, bestehend aus dem Hamstoff-Hartsegment und dem Makrodiol-Weichsegment, zu Assoziationen und Kristallisationen aus organischer Lösung. Eine gute Verarbeitbarkeit und gute Eigenschaften der Polyurethanbeschichtung sind dadurch nicht mehr gewährleistet. Insbesondere ist es problematisch organische Lösungen von Polyurethanharnstoffen herzustellen, die eine ausreichend hohe Molekulargewicht aufweisen um eine ausreichend gute Mechanik der erhaltenen Beschichtung zu erreichen, ohne dass die Polyurethanharnstoffe aus den Lösemitteln ausfallen.

Zur Verhinderung dieser Kristallisation werden im Stand der Technik Lösemittelgemische empfohlen, die in der Zwischenzeit aufgrund der gewachsenen toxikologischen Erkenntnisse zu den bedenklichen Lösemitteln gezählt werden. Für aliphatische Polyurethanharnstoffe verwenden DE-A 3 134 112 und DE-A 2 457 387, wie auch US 3,912,680 und US 3,904,796 Lösemittelmischungen von beispielsweise erheblichen Anteilen an aromatischen Kohlenwasserstoffen mit Alkoholen, wie unter anderem Mischungen von Toluol oder Xylol mit iso-Propanol oder tert.-Butanol.

Toluol ist aufgrund neuerer toxikologischer Erkenntnisse ein Gefahrstoff, der in Lösemittelgemischen für Polyurethanharnstoffe zur Textilbeschichtung nur eingeschränkt und unter Einhaltung relativ aufwändiger Maßnahmen verwendet werden sollte. Gleiches gilt für das als reizend und gesundheitsschädlich eingestufte Xylol. Die bisher ebenfalls in der Textilbeschichtung üblichen Amid- und Harnstoff-haltigen Lösemittel wie Dimethylformamid, Dimethylacetamid, N-Methylpyrrolidon oder Tetramethylharnstoff sind ebenfalls als gesundheitsgefährdend eingestufte Lösemittel und daher sind bei ihrer Verwendung aufwendige und teure Sicherheitsmaßnahmen einzuhalten.

Die DE-A 102008032779, die WO-A 2006/089648 und die WO-A 2007/082665 offenbaren als Textilbeschichtungen geeignete spezielle Polyurethanharnstofflösungen, die stets γ-Butyrolacton als Colöser enthalten müssen. Allerdings ist auch γ-Butyrolacton als Colöser in einigen Anwendungen unerwünscht. Polyurethanharnstofflösungen für Beschichtungen im allgemeinen sind weiterhin auch aus der US 3,609,112 bekannt.

Weiterhin spielen Polyurethanharnstoff-Beschichtungen auf Basis organischer Lösemittel eine wichtige Rolle bei der Herstellung von Kunstleder durch Beschichtung von Textilien. Besonders der sogenannte Koagulationsprozess, wie er in "New Materials Permeable to Water Vapor", Harro Träubel, Springer Verlag, Berlin, Heidelberg, New York, 1999, ISBN 3-540-64946-8, Seite 42 bis 63, ist dabei ein oft angewandtes Verfahren. Dabei wird ein textiles Substrat mit einer Polyurethan-lösung in Dimethylfomamid (DMF) beschichtet. Anschließend wird das beschichtete Substrat durch mehrere DMF/Wasserbäder geführt, deren Anteil an Wasser zunimmt. Durch Kontakt mit Wasser koaguliert das Polyurethan und es entsteht ein mikroporöser Film. Die nach diesem Verfahren hergestellten Produkte werden insbesondere als hochwertiges Kunstleder eingesetzt, wie beispielsweise die Kunstledermarken Clarino® and Alcantara®.

Ein großer Nachteil des Koagulationsprozesses liegt darin, dass große Mengen an DMF, welches als gesundheitsgefährdend eingestuft ist, eingesetzt werden müssen. Daher müssen besonders aufwendige Maßnahmen zum Schutz der Mitarbeiter getroffen werden und es ist erforderlich große Mengen an DMF/Wasser-Mischungen zu entsorgen oder wiederaufzubereiten.

Es wird daher stets nach alternativen, für den Koagulationsprozess geeigneten, Polyurethanlösungen in unbedenklichen organischen Lösemitteln gesucht.

Aufgabe der vorliegenden Erfindung war es daher ein Verfahren zur Beschichtung von Textilien und/oder Leder mit Polyurethanharnstoffen, sowie für das Verfahren geeignete Polyurethanharnstoffe, bereitzustellen, bei dem Beschichtungen mit einer guten Mechanik, wie beispielsweise einer hohen prozentualen Bruchdehnung, einer hohen Bruchspannung und einer möglichst geringen Quellung in Wasser erhalten werden können, ohne dass in diesem Verfahren große Mengen an teuren und/oder gesundheitsschädlichen Lösemitteln eingesetzt werden müssen. Insbesondere sollte das Verfahren auch geeignet sein zur Herstellung von mikroporösen Textilbeschichtungen, die als hochwertiges Kunstleder geeignet sind.

Diese Aufgabe wurde erfindungsgemäß gelöst durch ein Verfahren zur Beschichtung von Textilien und/oder Leder, wobei wenigstens ein Polyurethanharnstoff, welcher gelöst ist in einem Lösemittel oder Lösemittelgemisch eingesetzt wird, wobei das Lösemittel ausschließlich aus einem oder mehreren monohydroxyfunktionellen Alkoholen besteht oder ein Lösemittelgemisch bestehend aus ausschließlich organischen Lösemitteln, welches > 80 Gew.-%, bezogen auf die Gesamtmasse des Lösemittelgemisches, an wenigstens einem monohydroxyfunktionellen Alkohol enthält, verwendet wird und wobei der Polyurethanharnstoff aufgebaut ist aus
a) wenigstens einem araliphatischen, aliphatischen und/oder cycloaliphatischen Diisocyanat,
b) wenigstens einem Polyetherpolyol mit einem zahlenmittleren Molekulargewicht Mn ≥ 400 und ≤ 6000 g/mol, bestimmt mittels GPC in THF bei 23 °C, und einer mittleren Hydroxylfunktionalität von ≥ 1,5 und ≤ 4,
c) wenigstens einer aminofunktionellen Verbindung, die mindestens zwei isocyanatreaktive Aminogruppen aufweist,
d) gegebenenfalls wenigstens einem Alkohol, der mindestens zwei Hydroxylgruppen und eine Molmasse ≥ 60 und ≤ 399 g/mol aufweist,
e) gegebenenfalls wenigstens einer Verbindung die eine gegenüber Isocyanatgruppen reaktive Gruppe aufweist,
f) gegebenenfalls ≤ 20 Gew.-%, bezogen auf die Gesamtmasse des Polyurethanharnstoffs, an wenigstens einem Polyole mit einem zahlenmittleren Molekulargewicht Mn ≥ 500 und ≤ 6000 g/mol und einer mittleren Hydroxylfunktionalität von ≥ 1,5 und ≤ 4, welches unterschiedlich ist von b).

Das zahlenmittlere Molekulargewicht wird im Rahmen dieser Anmeldung stets bestimmt durch Gelpermeationschromatographie (GPC) in Tetrahydrofuran (THF) bei 23°C. Es wird dabei vorgegangen nach DIN 55672-1: "Gelpermeationschromatographie, Teil 1 - Tetrahydrofuran als Elutionsmittel" (SECurity GPC-System von PSS Polymer Service, Flussrate 1,0 ml/min; Säulen: 2×PSS SDV linear M, 8×300 mm, 5 µm; RID-Detektor). Dabei werden Polystyrolproben bekannter Molmasse zur Kalibrierung verwendet. Die Berechnung des zahlenmittleren Molekulargewichts erfolgt softwaregestützt. Basislinienpunkte und Auswertegrenzen werden entsprechend der DIN 55672 Teil 1 festgelegt.

Überraschenderweise wurde gefunden, dass mit dem erfindungsgemäßen Verfahren klebefreie Textil- und Lederbeschichtungen hergestellt werden können. Die nach dem erfindungsgemäßen Verfahren erhältlichen Beschichtungen weisen zudem eine gute Mechanik, wie eine hohe prozentuale Bruchdehnung, eine hohe Bruchspannung und eine geringe Quellung in Wasser auf. Das erfindungsgemäße Verfahren erfordert dabei nicht dein Einsatz von großen Mengen an teuren oder gesundheitsschädlichen Lösemitteln und ist zudem auch zur Herstellung von Beschichtungen, die als hochwertiges Kunstleder eingesetzt werden können, geeignet.

Ein weiterer Gegenstand der Erfindung ist die Verwendung eines Polyurethanharnstoffes, welcher gelöst ist in einem Lösemittel oder Lösemittelgemisch, wobei das Lösemittel ausschließlich aus einem oder mehreren monohydroxyfunktionellen Alkoholen besteht oder ein Lösemittelgemisch bestehend aus ausschließlich organischen Lösemitteln, welches > 80 Gew.-%, bezogen auf die Gesamtmasse des Lösemittelgemisches, an wenigstens einem monohydroxyfunktionellen Alkohol enthält, verwendet wird und wobei der Polyurethanharnstoff aufgebaut ist aus
a) wenigstens einem araliphatischen, aliphatischen und/oder cycloaliphatischen Diisocyanat,
b) wenigstens einem Polyetherpolyol mit einem zahlenmittleren Molekulargewicht Mn ≥ 400 und ≤ 6000 g/mol, bestimmt mittels GPC in THF bei 23 °C, und einer mittleren Hydroxylfunktionalität von ≥ 1,5 und ≤ 4,
c) wenigstens einer aminofunktionellen Verbindung, die mindestens zwei isocyanatreaktive Aminogruppen aufweist,
d) gegebenenfalls wenigstens einem Alkohol, der mindestens zwei Hydroxylgruppen und eine Molmasse ≥ 60 und ≤ 399 g/mol aufweist,
e) gegebenenfalls wenigstens einer Verbindung die eine gegenüber Isocyanatgruppen reaktive Gruppe aufweist,
f) gegebenenfalls ≤ 20 Gew.-%, bezogen auf die Gesamtmasse des Polyurethanharnstoffs, an wenigstens einem Polyole mit einem zahlenmittleren Molekulargewicht Mn ≥ 500 und ≤ 6000 g/mol und einer mittleren Hydroxylfunktionalität von ≥ 1,5 und ≤ 4, welches unterschiedlich ist von b)
zur Beschichtung von Textilien und/oder Leder.

Der erfindungsgemäß verwendete, gelöste Polyurethanharnstoff, inklusive des Lösemittels oder Lösemittelgemischs, wird im Folgenden auch als Polyurethanharnstofflösung bezeichnet.

Gelöst bedeutet im Sinne der Erfindung, dass es sich bei 23°C um homogene, einphasige flüssige Gemische aus wenigstens zwei Stoffen handelt, wobei die Gemische optisch klar sind. Klar bedeutet im Sinne der vorliegenden Erfindung, dass die Trübungswerte der Lösung ≤ 200 NTU (Nephelometric Turbidity Unit), bevorzugt ≤ 50 NTU, besonders bevorzugt ≤ 10 NTU und ganz besonders bevorzugt ≤ 3 NTU sind. Die Trübungswerte werden dabei durch eine Streulichtmessung im 90°-Winkel (Nephelometrie) bei einer Wellenlänge der Mess-Strahlung 860 nm entsprechend DIN EN ISO 7027 bestimmt, durchgeführt bei 23°C mit einem Labortrübungsmessgerät Modell 2100AN der Firma HACH LANGE GmbH, Berlin, Deutschland.

Polyurethanharnstoffe im Sinne der Erfindung sind polymere Verbindungen, die mindestens zwei bevorzugt mindestens drei Urethan-Gruppen-haltige Wiederholungseinheiten 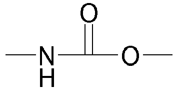 und zudem auch Harnstoff-Gruppen-haltige Wiederholungseinheiten aufweisen:

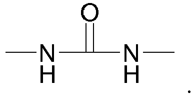

In einer bevorzugten Ausführungsform des erfindungsgemäßen Verfahrens weist der eingesetzte Polyurethanharnstoff keine hydrophilierenden Gruppen, insbesondere keine ionisch, potentiell ionischen oder nicht-ionisch hydrophilierenden Gruppen auf.
Ionisch hydrophilierende Gruppen im Sinne der Erfindung sind solche die in den Polyurethanharnstoff beispielsweise durch geeignete anionisch bzw. potentiell anionisch hydrophilierenden Verbindungen eingebracht werden könnten, die mindestens eine isocyanatreaktive Gruppe wie eine Hydroxylgruppe oder Amionogruppe aufweisen sowie mindestens eine Funktionalität wie z.B. -COO-M⁺, -SO₃-M⁺, -PO(O-M⁺)₂ mit M⁺ beispielsweise gleich Metallkation, H⁺, NH₄⁺, NHR₃⁺, NH₂R₂⁺ NH₃R⁺ wobei R jeweils ein C1-C12-Alkylrest, C5-C6-Cycloalkylrest und/oder ein C2-C4-Hydroxyalkylrest sein kann, die bei Wechselwirkung mit wässrigen Medien ein pH-Wertabhängiges Dissoziationsgleichgewicht eingeht und auf diese Weise negativ oder neutral geladen sein kann. Beispielhafte anionisch oder potentiell anionisch hydrophilierende Verbindungen sind Mono- und Dihydroxycarbonsäuren, Mono- und Dihydroxysulfonsäuren, sowie Mono- und Dihydroxyphosphonsäuren und ihre Salze.

Nicht-ionisch hydrophilierende Gruppen im Sinne der Erfindung sind solche, die in den Polyurethanharnstoff beispielsweise durch geeignete nicht-ionisch hydrophilierende Verbindungen eingeführt werden könnten, wie beispielsweise Polyoxyalkylenether, die mindestens eine Hydroxy- oder Aminogruppe enthalten. Beispiele sind die monohydroxyfunktionellen, im statistischen Mittel 5 bis 70, bevorzugt 7 bis 55 Ethylenoxideinheiten pro Molekül aufweisenden Polyalkylenoxidpolyetheralkohole, wie sie in an sich bekannter Weise durch Alkoxylierung geeigneter Startermoleküle zugänglich sind (z.B. in Ullmanns Encyclopädie der technischen Chemie, 4. Auflage, Band 19, Verlag Chemie, Weinheim S. 31-38 beschrieben). Diese Verbindungen sind entweder reine Polyethylenoxidether oder gemischte Polyalkylenoxidether, wobei sie dann aber mindestens 30 mol-%, bevorzugt mindestens 40 mol-%, bezogen auf alle enthaltenen Alkylenoxideinheiten an Ethylenoxideinheiten, enthalten.

Die Polyurethanharnstoffe der vorliegenden Erfindung werden im erfindungsgemäßen Verfahren gelöst in einem Lösemittel oder Lösemittelgemisch, und somit als Polyurethanharnstofflösungen und nicht als wässrige Dispersion, eingesetzt.

Als Komponente a) geeignete Verbindungen sind beispielsweise 1,4-Butylendiisocyanat, 1,5-Pentamethy¬lendiisocyanat (PDI), 1,6-Hexamethy-lendiisocyanat (HDI), Isophorondiisocyanat (IPDI), 2,2,4- und/oder 2,4,4-Trimethyl-hexa¬methy¬len¬¬diiso¬cyanat, die isomeren Bis-(4,4'-isocyanatocyclo¬hexyl)¬methane oder deren Mischungen beliebigen Isomeren¬gehalts (H12-MDI), 1,4-Cyclohexylendi-isocyanat, 4-Isocyanatomethyl-1,8-octandiisocyanat (Nonantriisocyanat), 1,3- und/oder 1,4-Bis-(2-isocyanato-prop-2-yl)-benzol (TMXDI), 1,3-Bis(isocyanatomethyl)benzol (XDI) sowie Alkyl-2,6-diisocyanatohexanoate (Lysin¬diisocyanate) mit C1-C8-Alkylgruppen.

Neben den vorstehend genannten Polyisocyanaten können anteilig auch modifizierte Diisocyanate oder Triisocyanate mit, Isocyanurat-, Urethan-, Allophanat-, Biuret-, Iminooxadiazindion- und/oder Oxadiazintrionstruktur mit eingesetzt werden.

Bevorzugt handelt es sich um Polyisocyanate oder Polyisocyanatgemische der vorstehend genannten Art mit einer mittleren NCO-Funktionalität von 2 bis 4, bevorzugt von 2 bis 2,6 und besonders bevorzugt von 2 bis 2,4.

Bevorzugt ist die Komponente a) ausgewählt aus aliphatischen, araliphatischen und/oder cycloaliphatischen Diisocyanaten, welche mindestens eine Isocyanatgruppe aufweisen, die an ein sekundäres und/oder tertiäres C-Atom gebunden ist.

Besonders bevorzugt ist die Komponente a) ausgewählt aus IPDI und/oder H12-MDI.

Weiterhin bevorzugt werden zur Herstellung des Polyurethanharnstoffs keine aromatischen Polyisocyanate eingesetzt.

Die Komponente a) wird bevorzugt in Mengen von ≥ 5 und ≤ 60 Gew.-%, besonders bevorzugt ≥ 10 und ≤ 40 Gew.-% und ganz besonders bevorzugt ≥ 15 und ≤ 35 Gew.-%, bezogen auf das Gesamtgewicht des Polyurethanharnstoffs, eingesetzt.

Die Komponente b) besteht aus einem oder mehreren Polyetherpolyolen mit einem zahlenmittleren Molekulargewicht Mn ≥ 400 und ≤ 6000 g/mol und einer Hydroxylfunktionalität von ≥ 1,5 und ≤ 4, bevorzugt mit einem zahlenmittleren Molekulargewicht Mn ≥ 500 und ≤ 2500 g/mol und einer Hydroxylfunktionalität von ≥ 1,9 und ≤ 3 und besonders bevorzugt mit einem zahlenmittleren Molekulargewicht Mn ≥ 1000 und ≤ 2000 g/mol und einer Hydroxylfunktionalität von ≥ 1,9 und ≤ 2,1.

Geeignete Polyetherpolyole der Komponente b) sind beispielsweise die in der Polyurethanchemie an sich bekannten Poly(tetramethylenglykol)polyetherpolyole, wie sie durch Polymerisation von Tetrahydrofuran mittels kationischer Ringöffnung erhältlich sind.

Ebenfalls geeignete Polyetherpolyole sind die an sich bekannten Additionsprodukte von Styroloxid, Ethylenoxid, Propylenoxid, Butylenoxid und/oder Epichlorhydrin an di- oder polyfunktionelle Startermoleküle. So sind insbesondere Polyalkylenglykole, wie Polyethylen-, Polypropylen- und/oder Polybutylenglykole anwendbar, insbesondere mit den oben genannten bevorzugten Molekulargewichten. Die Polyetherpolyole weisen dabei bevorzugt einen Anteil an Gruppen erhalten aus Ethylenoxid von < 50 Gew.-%, bevorzugt < 30 Gew.-% auf.

Als geeignete Startermoleküle können alle dem Stand der Technik nach bekannten Verbindungen eingesetzt werden, wie zum Beispiel Wasser, Butyldiglykol, Glycerin, Diethylenglykol, Trimethyolpropan, Propylenglykol, Sorbit, Ethylendiamin, Triethanolamin, 1,4-Butandiol.

Bevorzugt ist die Komponente b) ausgewählt aus Polypropylenglykolen und/oder Poly(tetra-methylenglykol)polyetherpolyolen, besonders bevorzugt ausgewählt aus Poly(tetra-methylenglykol)polyetherpolyolen.

In einer bevorzugten Ausführungsform der Erfindung handelt es sich bei der Komponente b) um ein oder mehrere Poly(tetramethylenglykol)polyetherpolyolen mit einem zahlenmittleren Molekulargewicht Mn ≥ 500 und ≤ 3000 g/mol und einer Hydroxylfunktionalität von ≥ 1,9 und ≤ 2,1.

In einer besonders bevorzugten Ausführungsform ist die Komponente b) ein Gemisch aus Poly(tetramethylenglykol)polyetherpolyolen I mit einem zahlenmittleren Molekulargewichte Mₙ von ≥ 500 und ≤ 1500 g/mol, besonders bevorzugt von ≥ 600 und ≤ 1200 g/mol, ganz besonders bevorzugt von 1000 g/mol und Poly(tetramethylenglykol)polyetherpolyolen II mit einem zahlenmittleren Molekulargewichte Mₙ von ≥ 1500 und ≤ 3000 g/mol, besonders bevorzugt von ≥ 1800 und ≤ 2500 g/mol, ganz besonders bevorzugt von 2000 g/mol.

Das Gewichtsverhältnis der Poly(tetramethylenglykol)polyetherpolyole I zu den Poly(tetramethylenglykol)polyetherpolyolen II liegt bevorzugt im Bereich von ≥ 0,1 und ≤ 10, besonders bevorzugt im Bereich von ≥ 0,2 und ≤ 8, ganz besonders bevorzugt im Bereich von ≥ 1 und ≤ 6.

Die Komponente b) wird bevorzugt in Mengen von ≥ 30 und ≤ 90 Gew.-%, besonders bevorzugt ≥ 50 und ≤ 85 Gew.-% und ganz besonders bevorzugt ≥ 55 und ≤ 75 Gew.-%, bezogen auf das Gesamtgewicht des Polyurethanharnstoffs, eingesetzt.

Bei der Komponente c) handelt es sich um eine oder mehrere aminofunktionelle Verbindungen, die mindestens zwei isocyanatreaktive Aminogruppen aufweisen.

Als Komponente c) sind beispielsweise geeignet Di- oder Polyamine wie 1,2-Ethylendiamin, 1,2- und 1,3-Diaminopropan, 1,4-Diaminobutan, 1,6-Diaminohexan, 2,2,4- und 2,4,4-Trimethylhexamethylendiamin, 2-Methylpentamethylendiamin, Diethylentriamin, Triaminononan, 1,3- und 1,4-Xylylendiamin, α,α,α',α'-Tetramethyl-1,3- und -1,4-xylylendiamin und 4,4'-Diaminodicyclohexylmethan (H12-MDA), Isophorondiamin (IPDA) und/oder 1,2-Dimethylethylendiamin. Ebenfalls geeignet sind Hydrazin oder sowie Hydrazide wie Adipinsäuredihydrazid.

Die Verbindungen der Komponente c) enthalten bevorzugt keine hydrophilierenden Gruppen, insbesondere keine ionisch hydrophilierenden Gruppen.

In einer besonders bevorzugten Ausführungsform der Erfindung ist die Komponente c) ausgewählt aus Aminen, die mindestens zwei isocyanatreaktive Aminogruppen aufweisen, die an primäre und/oder sekundäre C-Atome gebunden sind.
Weiterhin bevorzugt ist die Komponente c) ausgewählt aus symmetrisch aufgebauten Diaminen. Ganz besonders bevorzugt ist die Komponente c) ausgewählt aus symmetrischen Diaminen, die mindestens zwei isocyanatreaktive Aminogruppen aufweisen, die an primäre und/oder sekundäre C-Atome gebunden sind.

Bevorzugt ist die Komponente c) ausgewählt aus Ethylendiamin und/oder H12-MDA, besonders bevorzugt ist die Komponente c) H12-MDA.

Die Komponente c) wird bevorzugt in Mengen von ≥ 2 und ≤ 25 Gew.-%, besonders bevorzugt ≥ 5 und ≤ 20 Gew.-% und ganz besonders bevorzugt ≥ 9 und ≤ 16 Gew.-%, bezogen auf das Gesamtgewicht des Polyurethanharnstoffs, eingesetzt.

In einer bevorzugten Ausführungsform der Erfindung ist entweder die Komponente a) H12-MDI oder die Komponente c) H12-MDA oder die Komponente a) H12-MDI und die Komponente c) H12-MDA.

Gegebenenfalls wird der Polyurethanharnstoff zudem aufgebaut aus Komponente d), ein oder mehrere Alkohole, die mindestens zwei Hydroxylgruppen und eine Molmasse von ≥ 60 und ≤ 399 g/mol aufweisen, wie beispielsweise Polyole des genannten Molmassenbereichs mit bis zu 20 Kohlenstoffatomen, wie Ethylenglykol, Diethylenglykol, Triethylenglykol, 1,2-Propandiol, 1,3-Propandiol, 1,4-Butandiol, 1,3-Butylenglykol, Cyclohexandiol, 1,4-Cyclohexandimethanol, 1,6-Hexandiol, Neopentylglykol, Hydrochinondihydroxyethylether, Bisphenol A (2,2-Bis(4-hydroxyphenyl)propan), hydriertes Bisphenol A, (2,2-Bis(4-hydroxycyclohexyl)propan), Trimethylolpropan, Glycerin, Pentaerythrit.

Die Komponente d) wird bevorzugt in Mengen von ≥ 0 und ≤ 10 Gew.-%, besonders bevorzugt ≥ 0 und ≤ 3 Gew.-%, bezogen auf das Gesamtgewicht des Polyurethanharnstoffs, und ganz besonders bevorzugt gar nicht eingesetzt.

Weiterhin kann der Polyurethanharnstoff aufgebaut sein aus Komponente e), einer oder mehreren Verbindungen, die eine gegenüber Isocyanatgruppen reaktive Gruppe aufweisen, insbesondere Verbindungen die eine Amino- oder Hydroxygruppe aufweisen. Geeignete Verbindungen der Komponente e) sind beispielsweise Methylamin, Ethylamin, Propylamin, Butylamin, Octylamin, Laurylamin, Stearylamin, Isononyloxypropylamin, Dimethylamin, Diethylamin, Dipropylamin, Dibutylamin, N-Methylaminopropylamin, Diethyl(methyl)aminopropylamin, Morpholin, Piperidin, Methanol, Ethanol, iso-Propanol, n-Propanol, n-Butanol, Ethylenglykolmonobutylether, Diethylenglykolmonomethylether, Diethylenglykolmonobutylether, Propylenglykolmonomethylether, Dipropylenglykol-monomethylether, Tripropylenglykolmonomethylether, Dipropylenglykolmonopropylether, Propylenglykolmonobutylether, Dipropylenglykolmonobutylether, Tripropylenglykolmonobutylether, 2-Ethylhexanol, 1-Octanol, 1-Dodecanol, 1-Hexadecanol.

Komponente e) umfasst bevorzugt keine monofunktionellen Polyetherpolyole, die einen Anteil an Gruppen erhalten aus Ethylenoxid von > 30 Gew.-%, bevorzugt > 50 Gew.-% aufweisen.

Der als Lösemittel für den Polyurethanharnstoff eingesetzte monohydroxyfunktionelle Alkohol kann ebenfalls als Aufbaukomponente e) für den Polyurethanharnstoff dienen.

Die Komponente e) wird, bevorzugt in Mengen, von ≥ 0 und ≤ 10 Gew.-%, besonders bevorzugt ≥ 0 und ≤ 3 Gew.-%, bezogen auf das Gesamtgewicht des Polyurethanharnstoffs, und ganz besonders bevorzugt gar nicht eingesetzt, wobei hier der als Lösemittel für den Polyurethanharnstoff eingesetzte monohydroxyfunktionelle Alkohol als Komponente e) unberücksichtigt bleibt.

Der monohydroxyfunktionelle Alkohol, welcher als Lösemittel für den Polyurethanharnstoff dient, macht bevorzugt ≥ 0 und ≤ 5 Gew.-%, besonders bevorzugt ≥ 0,01 und ≤ 3 Gew.-% und ganz besonders bevorzugt ≥ 0,01 und ≤ 2 Gew.-% der Gesamtmasse des Polyurethanharnstoffs aus.

Gegebenenfalls kann der Polyurethanharnstoff auch aufgebaut sein aus der Komponente f), einem Polyol oder mehreren Polyolen mit einem zahlenmittleren Molekulargewicht Mn ≥ 500 und ≤ 6000 g/mol und einer Hydroxylfunktionalität von ≥ 1,5 und ≤ 4, wobei die Polyole unterschiedlich sind von b).

Die Komponente f) wird bevorzugt in Mengen von ≥ 0 und ≤ 20 Gew.-%, besonders bevorzugt ≥ 0 und ≤ 10 Gew.-%, bezogen auf das Gesamtgewicht des Polyurethanharnstoffs, und ganz besonders bevorzugt gar nicht eingesetzt.

Bevorzugt weisen die Polyole der Komponente f) ein zahlenmittleres Molekulargewicht Mn ≥ 1000 und ≤ 3000 g/mol und einer Hydroxylfunktionalität von ≥ 1,8 und ≤ 3.

Als Komponente f) geeignete Polyole sind die in der Polyurethanlacktechnologie an sich bekannten Polyesterpolyole, Polyacrylatpolyole, Polyurethanpolyole, Polycarbonatpolyole, Polyesterpolyacrylatpolyole, Polyurethanpolyacrylatpolyole, Polyurethanpolyesterpolyole, Polyurethanpolyetherpolyole, Polyurethanpolycarbonatpolyole, Polyetherpolycarbonatpolyole und/oder Polyesterpolycarbonatpolyole, insbesondere Polyesterpolyole und/oder Polycarbonatpolyole..

Polyesterpolyole sind beispielsweise die an sich bekannten Polykondensate aus Di- sowie gegebenenfalls Tri-, und Tetraolen und Di- sowie gegebenenfalls Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele hierfür geeigneter Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopentylglykolester, wobei Hexandiol(1,6) und Isomere, Neopentylglykol und Hydroxypivalinsäureneopentylglykolester bevorzugt sind. Daneben können auch Polyole wie Trimethylolpropan, Glycerin, Erythrit, Pentaerythrit, Trimethylolbenzol oder Trishydroxyethylisocyanurat eingesetzt werden.

Als Dicarbonsäuren können Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbernsteinsäure, 3,3-Diethylglutarsäure und/oder 2,2-Dimethylbernsteinsäure eingesetzt werden. Als Säurequelle können auch die entsprechenden Anhydride verwendet werden.

Sofern die mittlere Hydroxylfunktionalität des zu veresternden Polyols größer als 2 ist, können zusätzlich auch Monocarbonsäuren, wie Benzoesäure und Hexancarbonsäure mit verwendet werden.

Bevorzugte Säuren sind aliphatische oder aromatische Säuren der vorstehend genannten Art. Besonders bevorzugt sind Adipinsäure, Isophthalsäure und gegebenenfalls Trimellithsäure, ganz besonders bevorzugt ist Adipinsäure.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind Caprolacton, Butyrolacton und Homologe. Bevorzugt ist Caprolacton.

In der Komponente f) können auch Hydroxylgruppen aufweisende Polycarbonate, bevorzugt Polycarbonatdiole, mit zahlenmittleren Molekulargewichten Mn von 400 bis 8000 g/mol, bevorzugt von 600 bis 3000 g/mol eingesetzt werden. Diese sind durch Reaktion von Kohlensäurederivaten, wie Diphenylcarbonat, Dimethylcarbonat oder Phosgen, mit Polyolen, bevorzugt Diolen, erhältlich.

Beispiele derartiger Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A und lactonmodifizierte Diole der vorstehend genannten Art. Die Hydroxylgruppen aufweisenden Polycarbonate sind bevorzugt linear gebaut.

Weiterhin bevorzugt ist der Polyurethanharnstoff aufgebaut aus ≥ 5 und ≤ 60 Gew.-% der Komponente a), ≥ 30 und ≤ 90 Gew.-% der Komponente b), ≥ 2 und ≤ 25 Gew.-% der Komponente c), ≥ 0 und ≤ 10 Gew.-% der Komponente d), ≥ 0 und ≤ 10 Gew.-% der Komponente e) und ≥ 0 und ≤ 20 Gew.-% der Komponente f), jeweils bezogen auf das Gesamtgewicht des Polyurethanharnstoffs, wobei sich die Komponenten a) bis f) zu 100 Gew.-% ergänzen.

Besonders bevorzugt ist der Polyurethanharnstoff aufgebaut aus ≥ 10 und ≤ 40 Gew.-% der Komponente a), ≥ 55 und ≤ 85 Gew.-% der Komponente b), ≥ 5 und ≤ 20 Gew.-% der Komponente c), ≥ 0 und ≤ 3 Gew.-% der Komponente d), ≥ 0 und ≤ 3 Gew.-% der Komponente e) und ≥ 0 und ≤ 1 Gew.-% der Komponente f), jeweils bezogen auf das Gesamtgewicht des Polyurethanharnstoffs, wobei sich die Komponenten a) bis f) zu 100 Gew.-% ergänzen.

Der erfindungsgemäß verwendete Polyurethanharnstoff weist bevorzugt ein zahlenmittleres Molekulargewicht Mn von ≥ 3000 und ≤ 100000 g/mol, besonders bevorzugt von ≥ 5000 und ≤ 50000 g/mol auf. Polyurethanharnstoffe dieser Molmasse sind besonders geeignet um Beschichtungen mit guten mechanischen Eigenschaften zu erhalten.

In einer bevorzugten Ausführungsform der Erfindung ist der erfindungsgemäß verwendete Polyurethanharnstoff aufgebaut aus
a) wenigstens einem aliphatischen, araliphatischen und/oder cycloaliphatischen Diisocyanat, das mindestens eine Isocyanatgruppe aufweist, die an ein sekundäres und/oder tertiäres C-Atom gebunden ist,
b) wenigstens einem Polyetherpolyol mit einem zahlenmittleren Molekulargewicht Mn ≥ 500 und ≤ 2500 g/mol und einer Hydroxylfunktionalität von ≥ 1,9 und ≤ 3,
c) wenigstens einer aminofunktionellen Verbindung, ausgewählt aus symmetrischen Diaminen, die mindestens zwei isocyanatreaktive Aminogruppen aufweisen, die an primäre und/oder sekundäre C-Atome gebunden sind,
d) gegebenenfalls wenigstens ein Alkohol, der mindestens zwei Hydroxylgruppen und eine Molmasse ≥ 60 und ≤ 399 g/mol aufweist,
e) gegebenenfalls wenigstens eine Verbindung die eine gegenüber Isocyanatgruppen reaktive Gruppe aufweist und
f) gegebenenfalls ≤ 20 Gew.-%, bezogen auf die Gesamtmasse des Polyurethanharnstoffs, an wenigstens einem Polyol mit einer zahlenmittleren Molekulargewicht Mn ≥ 500 und ≤ 6000 g/mol und einer Hydroxylfunktionalität von ≥ 1,5 und ≤ 4, welches unterschiedlich ist von b).

Weiterhin bevorzugt ist der Polyurethanharnstoff in dieser vorgenannten Ausführungsform aufgebaut aus ≥ 5 und ≤ 60 Gew.-% der Komponente a), ≥ 30 und ≤ 90 Gew.-% der Komponente b), ≥ 2 und ≤ 25 Gew.-% der Komponente c), ≥ 0 und ≤ 10 Gew.-% der Komponente d), ≥ 0 und ≤ 10 Gew.-% der Komponente e) und ≥ 0 und ≤ 20 Gew.-% der Komponente f), jeweils bezogen auf das Gesamtgewicht des Polyurethanharnstoffs, wobei sich die Komponenten a) bis f) zu 100 Gew.-% ergänzen.

Besonders bevorzugt ist der Polyurethanharnstoff in dieser vorgenannten Ausführungsform aufgebaut aus ≥ 10 und ≤ 40 Gew.-% der Komponente a), ≥ 55 und ≤ 85 Gew.-% der Komponente b), ≥ 5 und ≤ 20 Gew.-% der Komponente c), ≥ 0 und ≤ 3 Gew.-% der Komponente d), ≥ 0 und ≤ 3 Gew.-% der Komponente e) und ≥ 0 und ≤ 1 Gew.-% der Komponente f), jeweils bezogen auf das Gesamtgewicht des Polyurethanharnstoffs, wobei sich die Komponenten a) bis f) zu 100 Gew.-% ergänzen.

In einer besonders bevorzugten Ausführungsform der Erfindung ist der erfindungsgemäß verwendete Polyurethanharnstoff aufgebaut aus
a) wenigstens einem Diisocyanat ausgewählt aus IPDI und/oder H12-MDI,
b) wenigstens einem Polyetherpolyol mit einem zahlenmittleren Molekulargewicht Mn ≥ 500 und ≤ 2500 g/mol und einer Hydroxylfunktionalität von ≥ 1,9 und ≤ 3, ausgewählt aus Polypropylenglykolen und/oder Poly(tetramethylenglykol)polyetherpolyolen,
c) wenigstens einer aminofunktionellen Verbindung, und ausgewählt ist aus Ethylendiamin und/oder H12-MDA,
d) gegebenenfalls wenigstens ein Alkohol, der mindestens zwei Hydroxylgruppen und eine Molmasse ≥ 60 und ≤ 399 g/mol aufweist,
e) gegebenenfalls wenigstens eine Verbindung die eine gegenüber Isocyanatgruppen reaktive Gruppe aufweist und
f) gegebenenfalls ≤ 20 Gew.-%, bezogen auf die Gesamtmasse des Polyurethanharnstoffs, an wenigstens einem Polyol mit einer zahlenmittleren Molekulargewicht Mn ≥ 500 und ≤ 6000 g/mol und einer Hydroxylfunktionalität von ≥ 1,5 und ≤ 4, welches unterschiedlich ist von b).

Weiterhin bevorzugt ist der Polyurethanharnstoff in dieser vorgenannten Ausführungsform aufgebaut aus ≥ 5 und ≤ 60 Gew.-% der Komponente a), ≥ 30 und ≤ 90 Gew.-% der Komponente b), ≥ 2 und ≤ 25 Gew.-% der Komponente c), ≥ 0 und ≤ 10 Gew.-% der Komponente d), ≥ 0 und ≤ 10 Gew.-% der Komponente e) und ≥ 0 und ≤ 20 Gew.-% der Komponente f), jeweils bezogen auf das Gesamtgewicht des Polyurethanharnstoffs, wobei sich die Komponenten a) bis f) zu 100 Gew.-% ergänzen.

Besonders bevorzugt ist der Polyurethanharnstoff in dieser vorgenannten Ausführungsform aufgebaut aus ≥ 10 und ≤ 40 Gew.-% der Komponente a), ≥ 55 und ≤ 85 Gew.-% der Komponente b), ≥ 5 und ≤ 20 Gew.-% der Komponente c), ≥ 0 und ≤ 3 Gew.-% der Komponente d), ≥ 0 und ≤ 3 Gew.-% der Komponente e) und ≥ 0 und ≤ 1 Gew.-% der Komponente f), jeweils bezogen auf das Gesamtgewicht des Polyurethanharnstoffs, wobei sich die Komponenten a) bis f) zu 100 Gew.-% ergänzen.

Bevorzugt ist der Polyurethanharnstoff ausschließlich aufgebaut aus den Komponenten a) bis c) und gegebenenfalls d) bis f), besonders bevorzugt ausschließlich aus den Komponenten a) bis c).

Der Polyurethanharnstoff wird bevorzugt hergestellt, indem die Komponenten a) und b) sowie gegebenenfalls d) und f) in einem ersten Schritt zu einem NCO-terminierten Präpolymer umgesetzt werden, welches dann in einem darauf folgenden Schritt mit der Komponente c) sowie gegebenenfalls den Komponenten d) und e) umgesetzt wird.

Für die Herstellung der Polyurethanharnstoffe werden bevorzugt die Komponenten a) und b) sowie gegebenenfalls d) und f) zur Herstellung eines NCO-terminierten Präpolymers ganz oder teilweise vorgelegt, gegebenenfalls mit einem gegenüber Isocyanatgruppen inerten Lösungsmittel verdünnt und auf Temperaturen im Bereich von 50 bis 120°C aufgeheizt. Zur Beschleunigung der Isocyanatadditionsreaktion können die in der Polyurethan-Chemie bekannten Katalysatoren eingesetzt werden. In einer bevorzugten Variante wird jedoch ohne den Zusatz von Urethanisierungs-Katalysatoren gearbeitet.

Anschließend können die gegebenenfalls zu Beginn der Reaktion noch nicht zugegebenen Bestandteile von a) und b) sowie gegebenenfalls d) und f) zudosiert werden.

Bei der Herstellung der NCO-terminierten Präpolymere aus den Komponenten a) und b) sowie gegebenenfalls d) und f) beträgt das Stoffmengenverhältnis von Isocyanat-Gruppen zu isocyanatreaktiven Gruppen im allgemeinen ≥ 1,05 und ≤ 3,5, bevorzugt ≥ 1,1 und ≤ 3,0, besonders bevorzugt ≥ 1,1 und ≤ 2,5.

Unter isocyanatreaktiven Gruppen sind alle gegenüber Isocyanat-Gruppen reaktiven Gruppen zu verstehen, wie beispielsweise primäre und sekundäre Aminogruppen, Hydroxygruppen oder Thiolgruppen.
Die Umsetzung der Komponenten a) und b) sowie gegebenenfalls d) und f) zum Präpolymer erfolgt teilweise oder vollständig, bevorzugt aber vollständig. Es werden so Polyurethan-Präpolymere, die freie Isocyanatgruppen enthalten, in Substanz oder in Lösung erhalten.
Bevorzugt wir das NCO-terminierte Präpolymer ausschließlich aus den Komponenten a) und b) hergestellt.
Im Anschluss wird bevorzugt in einem weiteren Verfahrensschritt, falls noch nicht oder nur teilweise geschehen, das erhaltene Präpolymer mit Hilfe von einem oder mehreren organischen Lösemitteln gelöst. Als Lösemittel wird dabei bevorzugt ebenfalls ein Lösemittel oder Lösemittelgemisch eingesetzt, wobei das Lösemittel ausschließlich aus einem oder mehreren monohydroxyfunktionellen Alkoholen besteht oder ein Lösemittelgemisch bestehend aus ausschließlich organischen Lösemitteln, welches ≥ 50 Gew.-%, bezogen auf die Gesamtmasse des Lösemittelgemisches, an wenigstens einem monohydroxyfunktionellen Alkohol enthält, verwendet wird. Für das Lösemittel und das Lösemittelgemisch gelten ebenfalls die nachstehenden bevorzugten Ausführungsformen zum Lösemittel oder Lösemittelgemisch in dem der Polyurethanharnstoff gelöst ist. Das Lösemittel oder Lösemittelgemisch kann dabei auch von dem Lösemittel oder Lösemittelgemisch, in dem der Polyurethanharnstoff als Endprodukt später gelöst ist, verschieden sein. Bevorzugt ist das Lösemittel oder Lösemittelgemisch identisch mit dem Lösemittel oder Lösemittelgemisch, in dem der Polyurethanharnstoff als Endprodukt später gelöst ist.
Bevorzugt besteht das bei der Herstellung eingesetzte Lösemittel aus einem oder mehreren monohydroxyfunktionellen Alkoholen.
Das Verhältnis von Lösemittel zu Präpolymer liegt dabei bevorzugt bei ≥ 1:10 und ≤ 5:1, besonders bevorzugt bei ≥ 1:2 und ≤ 2:1 Gewichtsteilen.
Das Präpolymer wird bevorzugt vor dem Lösen abgekühlt auf Temperaturen von -20 bis 80°C, vorzugsweise 0 bis 50 °C und besonders bevorzugt von 15 bis 40°C.

In einem, sich gegebenenfalls an das Lösen des NCO-terminierten Präpolymers anschließenden, weiteren Schritt wird bevorzugt dann das im ersten Schritt erhaltene NCO-terminierte Präpolymer ganz oder teilweise mit der Komponente c) sowie gegebenenfalls den Komponenten d) und e) umgesetzt. Diese Umsetzung wird im allgemeinen als Kettenverlängerung, bzw. im Fall der Komponente e) als Kettenabbruch bezeichnet.
Bevorzugt wird dabei das NCO-terminierte Präpolymer vorgelegt und die Komponenten c) sowie gegebenenfalls d) und e) zudosiert. Bevorzugt erfolgt zunächst eine teilweise Umsetzung der NCO-Gruppen des Präpolymers mit den Komponenten c) und gegebenenfalls d) und im Anschluss der Kettenabbruch durch Umsetzung der verbleibenden NCO Gruppen mit der Komponente e). Die Komponenten c) und gegebenenfalls e) können dabei auch stufenweise in mehreren Schritten, insbesondere in zwei Schritten, zugegeben werden.
Die Komponente c) sowie gegebenenfalls d) und e) werden bevorzugt gelöst in einem oder mehreren organischen Lösemitteln eingesetzt. Als Lösemittel wird dabei bevorzugt ebenfalls ein Lösemittel oder Lösemittelgemisch eingesetzt, wobei das Lösemittel ausschließlich aus einem oder mehreren monohydroxyfunktionellen Alkoholen besteht oder ein Lösemittelgemisch bestehend aus ausschließlich organischen Lösemitteln, welches ≥ 50 Gew.-%, bezogen auf die Gesamtmasse des Lösemittelgemisches, an wenigstens einem monohydroxyfunktionellen Alkohol enthält, verwendet wird. Für das Lösemittel und das Lösemittelgemisch gelten ebenfalls die nachstehenden bevorzugten Ausführungsformen zum Lösemittel oder Lösemittelgemisch in dem der Polyurethanharnstoff gelöst ist.
Das Lösemittel oder Lösemittelgemisch kann dabei auch von dem Lösemittel oder Lösemittelgemisch, in dem der Polyurethanharnstoff als Endprodukt später gelöst ist, verschieden sein. Bevorzugt ist das Lösemittel oder Lösemittelgemisch identisch mit dem Lösemittel oder Lösemittelgemisch, in dem der Polyurethanharnstoff als Endprodukt später gelöst ist.
Bevorzugt besteht das bei der Herstellung eingesetzte Lösemittel für Komponente c) aus einem oder mehreren monohydroxyfunktionellen Alkoholen.

Wenn Lösemittel als Verdünnungsmittel verwendet werden, so beträgt der Verdünnungsmittelgehalt in der bei der Kettenverlängerung eingesetzten Komponenten c), sowie gegebenenfalls d) und e) bevorzugt 1 bis 95 Gew.-%, besonders bevorzugt 3 bis 50 Gew.%, bezogen auf das Gesamtgewicht der Komponente c) sowie gegebenenfalls d) und e) einschließlich Verdünnungsmittel.

Die Zugabe der Komponenten c) sowie gegebenenfalls d) und e) erfolgt bevorzugt bei Temperaturen von -20 bis 60°C, vorzugsweise 0 bis 50 und besonders bevorzugt von 15 bis 40°C.

Der Kettenverlängerungsgrad, also das molare Verhältnis von NCO-reaktiven Gruppen der zur Kettenverlängerung und Kettenabbruch eingesetzten Komponenten c) sowie gegebenenfalls d) und e) zu freien NCO-Gruppen des Präpolymers, ist insbesondere ≥ 50 und ≤ 120%, besonders bevorzugt ≥ 60 und ≤ 100% und ganz besonders bevorzugt ≥ 70 und ≤ 95%.

Bevorzugt beträgt das molare Verhältnis der isocyanatreaktiven Gruppen der Komponente c) zu den freien NCO-Gruppen des Präpolymers ≥ 50 und ≤ 120%, besonders bevorzugt ≥ 60 und ≤ 100% und ganz besonders bevorzugt ≥ 70 und ≤ 95%.

In einer bevorzugten Ausführungsform der Erfindung werden die freien NCO-gruppen des Präpolymers nur teilweise mit der Komponente c) umgesetzt, bevorzugt beträgt dabei das molare Verhältnis der isocyanatreaktiven Gruppen der Komponente c) zu den freien NCO-Gruppen des Präpolymers ≥ 60 und ≤ 95% und die verbleibenden freien NCO Gruppen reagieren mit den Hydroxygruppen des Lösemittels ab, so dass ein NCO freier Polyurethanharnstoff entsteht.

Im Anschluss an die Herstellung kann der Polyurethanharnstoff, sofern im Herstellungsverfahren bereits erfindungsgemäße Lösemittel oder Lösemittelgemische eingesetzt wurden, weiterhin mit einem Lösemittel oder Lösemittelgemisch verdünnt und dabei gelöst werden, wobei das Lösemittel ausschließlich aus einem oder mehreren monohydroxyfunktionellen Alkoholen besteht oder ein Lösemittelgemisch bestehend aus ausschließlich organischen Lösemitteln, welches ≥ 50 Gew.-%, bezogen auf die Gesamtmasse des Lösemittelgemisches, an wenigstens einem monohydroxyfunktionellen Alkohol enthält, verwendet wird.

Wurden während der Umsetzung keine erfindungsgemäßen Lösemittel oder Lösemittelgemische eingesetzt, so wird im Anschluss an die Herstellung des Polyurethanharnstoffs dieser in einem Lösemittel oder Lösemittelgemisch eingesetzt, wobei das Lösemittel ausschließlich aus einem oder mehreren monohydroxyfunktionellen Alkoholen besteht oder ein Lösemittelgemisch bestehend aus ausschließlich organischen Lösemitteln, welches ≥ 50 Gew.-%, bezogen auf die Gesamtmasse des Lösemittelgemisches, an wenigstens einem monohydroxyfunktionellen Alkohol enthält, verwendet wird.

Das Lösen des Polyurethanharnstoffs kann mit den üblichen Techniken zur Scherung erfolgen, beispielsweise durch Rühren mit Standard-Rührern, beispielsweise wie in DIN 28131 genannt.

Als Lösemittel oder Bestandteil des Lösemittelgemisches geeignet sind prinzipiell alle monohydroxyfunktionellen, aliphatischen Alkohole mit einem bis sechs Kohlenstoffatomen, wie beispielsweise Methanol, Ethanol, n-Propanol, iso-Propanol, n-Butanol, sec.-Butanol, 2-Ethylhexanol oder Ethylenglykolmonobutylether. Besonders bevorzugt handelt es sich bei dem monohydroxyfunktionellen Alkohol um Ethanol oder iso-Propanol, ganz besonders bevorzugt um iso-Propanol.
Wird ein Lösemittelgemisch eingesetzt, so können neben den monohydroxyfunktionellen Alkoholen noch < 20 Gew.-%, bezogen auf das Gesamtgewicht des Lösemittelgemisches, eines weiteren organischen Lösemittels eingesetzt werden. Geeignete Lösemittel sind dabei sind beispielsweise Ester, wie z.B. Ethylacetat, Butylacetat, Methyoxypropylacetat oder Butyrolacton, Ketone, wie z.B. Aceton oder Methylethylketon, Ether, wie z.B. Tetrahydrofuran oder tert.-Butylmethylether, aromatische Lösungsmittel, wie z.B. Xylol oder Solvent Naphtha. Im Falle der Verwendung von Ethanol können typische Vergällungsmittel als Additive in den üblichen Zuschlagmengen enthalten sein.

Bevorzugt beträgt der Anteil der weiteren organischen Lösemittel ≤ 10 Gew.-%, besonders bevorzugt ≤ 5 Gew.-% und ganz besonders bevorzugt ≤ 2 Gew.-%, bezogen auf das Gesamtgewicht des Lösemittelgemisches. In einer ganz besonders bevorzugten Ausführungsform sind neben monohydroxyfunktionellen, aliphatischen Alkoholen keinerlei weitere organische Lösemittel enthalten.

Als weitere Lösemittel unvorteilhaft sind Lösemittel wie beispielsweise Dimethylformamid, N-Methylpyrrolidon oder Toluol, wie sie als Colösemittel für Polyurethane oder Polyurethanharnstoffe eingesetzt werden.

Bei den weiteren Lösemitteln handelt es sich auch nicht um Wasser. Die durch Lösen des Polyurethanharnstoffs in den erfindungsgemäß verwendeten Lösemitteln oder Lösemittelgemischen erhaltene Polyurethanharnstofflösung ist bevorzugt wasserfrei, ausgenommen der Anteile an Wasser, die in den eingesetzten organischen Lösemitteln herstellungsbedingt enthalten sind.

Der Wasseranteil der Polyurethanharnstofflösung liegt bevorzugt bei ≤ 10 Gew.-%, besonders bevorzugt bei ≤ 4,5 Gew.-% und ganz besonders bevorzugt bei ≤ 1 Gew.-%, bezogen auf die Gesamtmasse der Polyurethanharnstofflösung.

Der Anteil des Polyurethanharnstoffs an der erfindungsgemäß eingesetzten Polyurethanharnstofflösung (auch bezeichnet als Feststoffgehalt) liegt dabei bevorzugt ≥ 10 und ≤ 80 Gew.-%, besonders bevorzugt ≥ 15 und ≤ 60 Gew.-% und ganz besonders bevorzugt bei ≥ 20 und ≤ 50 Gew.-%, bezogen auf das Gesamtgewicht der Polyurethanharnstofflösung.

Der erfindungsgemäß verwendeten Polyurethanharnstofflösung können neben den Polyurethanharnstoffen und den Lösemitteln Additive, Hilfs- und Zusatzstoffe zugesetzt werden, wie Schaumverhinderer, Entgasungsmittel, Verdicker bzw. Thixotropiermittel, Antioxidantien, Lichtschutzmittel, Emulgatoren, Weichmacher, Pigmente, Farbstoffe, Mattierungsmittel, Griffhilfsmittel, Füllstoffe, Additive zur Gebindestabilisierung, Biozide, Hydrophobierungsmittel und/oder Verlaufshilfsmittel. Diese Additive sind bevorzugt in einer Konzentration ≤ 15 Gew.-%, besonders bevorzugt ≥ 0,01 % und ≤ 10 Gew.-%, bezogen auf das Gesamtgewicht der Polyurethanharnstofflösung vorhanden.

Der gelöste Polyurethanharnstoff wird bevorzugt mit üblichen Auftragungs- bzw. Beschichtungseinrichtungen, beispielsweise einem Rakel, z. B. einem Streichrakel, Walzen oder anderen Geräten direkt auf einen Träger aufgetragen. Auch Drucken, Sprühen oder Tauchen ist möglich. Die Auftragung kann ein- oder beidseitig erfolgen.

Als Trägermaterialien eignen sich bevorzugt textile Flächengebilde. Besonders bevorzugt sind faserartige Materialien als Träger für die erfindungsgemäßen Zusammensetzungen.

Unter textilen Flächengebilden im Sinne der vorliegenden Erfindung sind beispielsweise Gewebe, Gewirke, gebundene und ungebundene Vliese zu verstehen. Die textilen Flächengebilde können aus synthetischen, natürlichen Fasern und/oder deren Mischungen aufgebaut sein. Grundsätzlich sind Textilien aus beliebigen Fasern für das erfindungsgemäße Verfahren geeignet. Durch die erfindungsgemäßen Zusammensetzung können die Träger in allen üblichen Arten behandelt bzw. veredelt werden, vorzugsweise durch Beschichten oder Verkleben der Fasern untereinander bzw. von Substraten miteinander.

Die textilen Träger können vor, während oder nach der Applikation der Polyurethanharnstofflösung oberflächenbehandelt werden, z. B. durch Vorbeschichten, Schleifen, Velourisieren, Rauhen und/oder Tumblen.

Alternativ kann die Textilbeschichtung nach dem sogenannten Transferverfahren erfolgen. Dabei wird die Beschichtung zunächst auf ein Trennpapier gebracht, ausgehärtet und in einem zweiten Schritt auf das endgültige Trägermaterial kaschiert.

Die erfindungsgemäßen Zusammensetzungen können auch in mehreren Schichten auf ein Trägermaterial aufgetragen werden. Dabei können auch Trocknungsschritte zwischengelagert sein.

Im Anschluss an das Aufbringen können die behandelten Materialien getrocknet werden. Für eine schnellere Trocknung zur Verdampfung des Wassers und gegebenenfalls des verbliebenen Lösemittels werden bevorzugt Temperaturen ≥ 20°C benutzt. Bevorzugt werden Temperaturen ≥ 30 und ≤ 200°C. Möglich ist auch eine zwei- oder mehrstufige Trocknung, mit entsprechend ansteigendem Temperaturgradienten, um eine Aufkochung der Polymerschicht zu verhindern. Die Trocknung erfolgt in der Regel unter Verwendung von an sich bekannten Heiz- und Trockenapparaten, wie (Umluft-) Trockenschränken, Heißlufttrocknern oder IR-Strahlern. Auch die Trocknung durch Führen des beschichteten Substrates über geheizte Oberflächen, z.B. Walzen, ist möglich. Der Auftrag sowie die Trocknung können jeweils diskontinuierlich oder kontinuierlich durchgeführt werden, bevorzugt ist jedoch ein gänzlich kontinuierliches Verfahren.

Die mittels dem erfindungsgemäßen Verfahren hergestellte Polymerschicht kann mit weiteren Schichten versehen werden. Dies kann einseitig oder beidseitig geschehen, in einer Schicht oder in mehreren Schichten übereinander, durch vollständige oder durch flächig partielle Beschichtung des Films. Auch eine Grundierung des Trägermaterials mit einer oder mehreren Schichten vor Aufbringung des erfindungsgemäßen Polyurethanharnstoffs ist möglich.

In einer bevorzugten Ausführungsform des erfindungsgemäßen Verfahrens wird der gelöste Polyurethanharnstoff in einem ersten Schritt auf ein textiles Material und/oder Leder aufgetragen und in einem darauf folgenden Schritt der Polyurethanharnstoff durch Kontakt mit Wasser auf oder in dem textilen Material und/oder Leder koaguliert.
Das Auftragen der Polyurethanharnstofflösung erfolgt dabei bevorzugt durch Tauchen und anschließendes Abstreifen oder flächiges Auftragen mit Hilfe von Rakeln und/oder Walzen.

Das Wasser liegt dabei in reiner Form oder im Gemisch mit weiteren Lösemitteln vor. In einer bevorzugten Variante sind liegt das Wasser in reiner Form vor, in einer anderen bevorzugten Variante liegt das Wasser im Gemisch mit dem Lösemittel bzw. den Lösemitteln vor, das/die auch als Lösemittel in der erfindungsgemäßen Polyurethanharnstoff-Lösung eingesetzt werden. In einer bevorzugten Variante werden mehre Wasserbäder hintereinander eingesetzt; besonders bevorzugt mit abnehmendem Lösemittelgehalt der Wasserbäder. Die Koagulation des Polyurethanharnstoffs erfolgt bevorzugt bereits in einem ersten Wasserbad vollständig. Dieses Wasserbad hat bevorzugt eine Temperatur von ≥ 10 und ≤ 80 °C, besonders bevorzugt von ≥ 20 und ≤ 50 °C und ganz besonders bevorzugt von ≥ 20 und ≤ 30 °C. Bevorzugt verbleibt das beschichtete textile Material oder Leder ≥ 0,5 und ≤ 60 min, besonders bevorzugt ≥ 1 und ≤ 30 min und ganz besonders bevorzugt ≥ 2 und ≤ 20 min im ersten Wasserbad. Die Wahl dieser Verweilzeit erfolgt abhängig von der Schichtdicke der Beschichtung und auch des behandelten Materials. Im Anschluss wird das beschichtete Trägermaterial bevorzugt durch mindestens zwei weitere aufeinander folgende Wasserbäder geführt, die im Gegenstrom laufen. Diese dienen zum Auswaschen des Lösemittels. Zwischen den einzelnen Waschbädern kann ein abquetschen des Materials erfolgen, um den Gehalt an Lösemittel zu senken.
Im Anschluss kann das behandelte textilen Material und/oder Leder getrocknet werden, um das aufgenommene Wasser und gegebenenfalls noch verbleibendes Lösemittel zu entfernen.
Zur Trocknung können die oben genannten Trocknungs-bedingungen und -verfahren eingesetzt werden. bevorzugt erfolgt die Trocknung nach einem Temperaturbandverfahren mit verschiedenen aufeinanderfolgenden Temperaturzonen. Bevorzugt sind drei verschiedene aufeinanderfolgende Temperaturzonen vorhanden, wobei bevorzugt die Temperatur der ersten Zone bei ≥ 70 und ≤ 90 °C, der zweiten Temperaturzone bei ≥ 91 und ≤ 120 °C und die der dritten Temperaturzone bei ≥ 121 und ≤ 155 °C liegt.

Die Gesamtdauer der Trocknung kann, in Abhängigkeit von der Schichtdicke der Beschichtung und des Materials bevorzugt ≥ 1 und ≤ 60 min, besonders bevorzugt ≥ 2 und ≤ 30 min und ganz besonders bevorzugt ≥ 3 und ≤ 20 min betragen.

Die mittels dem erfindungsgemäßen Verfahren hergestellte Polymerschicht kann mit weiteren Schichten versehen werden. Dies kann einseitig oder beidseitig geschehen, in einer Schicht oder in mehreren Schichten übereinander, durch vollständige oder durch flächig partielle Beschichtung des Films.

Das erfindungsgemäße Verfahren eignet sich beispielsweise zur Beschichtung bzw. Herstellung von Oberbekleidung, Kunstlederartikeln, Schuhen, Handschuhen, Möbelbezugsstoffen, Automobil-Innenausstattungsartikeln, Sportgeräten, Schutzhüllen, textilen Materialien für Bauanwendungen, Planen, Zelten und Industrietextilien wie beispielsweise Förderbändern.

Ein weiterer Gegenstand der Erfindung sind Textil- oder Lederbeschichtungen, die erhältlich sind nach dem erfindungsgemäßen Verfahren.

Die erfindungsgemäßen Beschichtungen weisen dabei vorteilhaft eine Bruchdehnung von ≥ 100 und ≤ 1500%, bevorzugt von ≥ 300 und ≤ 1300% und besonders bevorzugt von ≥ 500 und ≤ 1200% auf. Die Bestimmung der Bruchdehnung erfolgt gemäß der im Beispielteil angegebenen Methode.

Weiterhin vorteilhaft weisen die erfindungsgemäßen Beschichtungen eine Bruchspannung von ≥ 5 und ≤ 70 MPa, bevorzugt von ≥ 10 und ≤ 65 MPa und besonders bevorzugt von ≥ 15 und ≤ 6 MPa auf. Die Bestimmung der Bruchspannung erfolgt gemäß der im Beispielteil angegebenen Methode.

Ein weiterer Gegenstand der Erfindung ist ein Polyurethanharnstoff, welcher gelöst ist in einem Lösemittel oder Lösemittelgemisch, wobei das Lösemittel ausschließlich aus einem oder mehreren monohydroxyfunktionellen Alkoholen besteht oder ein Lösemittelgemisch bestehend aus ausschließlich organischen Lösemitteln, welches ≥ 92 Gew.-%, bezogen auf die Gesamtmasse des Lösemittelgemisches, an wenigstens einem monohydroxyfunktionellen Alkohol enthält, verwendet wird, dadurch gekennzeichnet, dass der Polyurethanharnstoff aufgebaut ist aus
a) wenigstens einem araliphatischen, aliphatischen und/oder cycloaliphatischen Diisocyanat,
b) wenigstens einem Polyetherpolyol mit einem zahlenmittleren Molekulargewicht Mn ≥ 400 und ≤ 6000 g/mol, bestimmt mittels GPC bei 23 °C in THF, und einer mittleren Hydroxylfunktionalität von ≥ 1,5 und ≤ 4,
   c2) wenigstens einer aminofunktionellen Verbindung, ausgewählt aus symmetrischen Diaminen, die mindestens zwei isocyanatreaktive Aminogruppen aufweisen, die an primäre und/oder sekundäre C-Atome gebunden sind d) gegebenenfalls wenigstens einem Alkohol, der mindestens zwei Hydroxylgruppen und eine Molmasse ≥ 60 und ≤ 399 g/mol aufweist,
e) gegebenenfalls wenigstens einer Verbindung die eine gegenüber Isocyanatgruppen reaktive Gruppe aufweist,
f) gegebenenfalls ≤ 20 Gew.-%, bezogen auf die Gesamtmasse des Polyurethanharnstoffs, an wenigstens einem Polyole mit einem zahlenmittleren Molekulargewicht Mn ≥ 500 und ≤ 6000 g/mol und einer mittleren Hydroxylfunktionalität von ≥ 1,5 und ≤ 4, welches unterschiedlich ist von b).

Als Komponente a) geeignete Verbindungen sind beispielsweise 1,4-Butylendiisocyanat, 1,5-Pentamethylendiisocyanat (PDI), 1,6-Hexamethy-lendiisocyanat (HDI), Isophorondiisocyanat (IPDI), 2,2,4- und/oder 2,4,4-Trimethyl-hexa¬methy¬len¬¬diiso¬cyanat, die isomeren Bis-(4,4'-isocyanatocyclo¬hexyl)¬methane oder deren Mischungen beliebigen Isomeren¬gehalts (H12-MDI), 1,4-Cyclohexylendi-isocyanat, 4-Isocyanatomethyl-1,8-octandiisocyanat (Nonantriisocyanat), 1,3- und/oder 1,4-Bis-(2-isocyanato-prop-2-yl)-benzol (TMXDI), 1,3-Bis(isocyanatomethyl)benzol (XDI) sowie Alkyl-2,6-diisocyanatohexanoate (Lysin¬diisocyanate) mit C1-C8-Alkylgruppen.

Neben den vorstehend genannten Polyisocyanaten können anteilig auch modifizierte Diisocyanate oder Triisocyanate mit, Isocyanurat-, Urethan-, Allophanat-, Biuret-, Iminooxadiazindion- und/oder Oxadiazintrionstruktur mit eingesetzt werden.

Bevorzugt handelt es sich um Polyisocyanate oder Polyisocyanatgemische der vorstehend genannten Art mit einer mittleren NCO-Funktionalität von 2 bis 4, bevorzugt von 2 bis 2,6 und besonders bevorzugt von 2 bis 2,4.

Bevorzugt ist die Komponente a) ausgewählt aus aliphatischen, araliphatischen und/oder cycloaliphatischen Diisocyanaten, welche mindestens eine Isocyanatgruppe aufweisen, die an ein sekundäres und/oder tertiäres C-Atom gebunden ist.

Besonders bevorzugt ist die Komponente a) ausgewählt aus IPDI und/oder H12-MDI.

Weiterhin bevorzugt werden zur Herstellung des Polyurethanharnstoffs keine aromatischen Polyisocyanate eingesetzt.

Die Komponente a) wird bevorzugt in Mengen von ≥ 5 und ≤ 60 Gew.-%, besonders bevorzugt ≥ 10 und ≤ 40 Gew.-% und ganz besonders bevorzugt ≥ 15 und ≤ 35 Gew.-%, bezogen auf das Gesamtgewicht des Polyurethanharnstoffs, eingesetzt.

Die Komponente b) besteht aus einem oder mehreren Polyetherpolyolen mit einem zahlenmittleren Molekulargewicht Mn ≥ 400 und ≤ 6000 g/mol und einer Hydroxylfunktionalität von ≥ 1,5 und ≤ 4, bevorzugt mit einem zahlenmittleren Molekulargewicht Mn ≥ 500 und ≤ 2500 g/mol und einer Hydroxylfunktionalität von ≥ 1,9 und ≤ 3 und besonders bevorzugt mit einem zahlenmittleren Molekulargewicht Mn ≥ 1000 und ≤ 2000 g/mol und einer Hydroxylfunktionalität von ≥ 1,9 und ≤ 2,1.

Geeignete Polyetherpolyole der Komponente b) sind beispielsweise die in der Polyurethanchemie an sich bekannten Poly(tetramethylenglykol)polyetherpolyole, wie sie durch Polymerisation von Tetrahydrofuran mittels kationischer Ringöffnung erhältlich sind.

Ebenfalls geeignete Polyetherpolyole sind die an sich bekannten Additionsprodukte von Styroloxid, Ethylenoxid, Propylenoxid, Butylenoxid und/oder Epichlorhydrin an di- oder polyfunktionelle Startermoleküle. So sind insbesondere Polyalkylenglykole, wie Polyethylen-, Polypropylen- und/oder Polybutylenglykole anwendbar, insbesondere mit den oben genannten bevorzugten Molekulargewichten. Die Polyetherpolyole weisen dabei bevorzugt einen Anteil an Gruppen erhalten aus Ethylenoxid von < 50 Gew.-%, bevorzugt < 30 Gew.-% auf.

Als geeignete Startermoleküle können alle dem Stand der Technik nach bekannten Verbindungen eingesetzt werden, wie zum Beispiel Wasser, Butyldiglykol, Glycerin, Diethylenglykol, Trimethyolpropan, Propylenglykol, Sorbit, Ethylendiamin, Triethanolamin, 1,4-Butandiol.

Bevorzugt ist die Komponente b) ausgewählt aus Polypropylenglykolen und/oder Poly(tetramethylenglykol)polyetherpolyolen, besonders bevorzugt ausgewählt aus Poly(tetramethylenglykol)polyetherpolyolen.

In einer bevorzugten Ausführungsform der Erfindung handelt es sich bei der Komponente b) um ein oder mehrere Poly(tetramethylenglykol)polyetherpolyolen mit einem zahlenmittleren Molekulargewicht Mn ≥ 500 und ≤ 3000 g/mol und einer Hydroxylfunktionalität von ≥ 1,9 und ≤ 2,1.

In einer besonders bevorzugten Ausführungsform ist die Komponente b) ein Gemisch aus Poly(tetramethylenglykol)polyetherpolyolen I mit einem zahlenmittleren Molekulargewichte Mₙ von ≥ 500 und ≤ 1500 g/mol, besonders bevorzugt von ≥ 600 und ≤ 1200 g/mol, ganz besonders bevorzugt von 1000 g/mol und Poly(tetramethylenglykol)polyetherpolyolen II mit einem zahlenmittleren Molekulargewichte Mₙ von ≥ 1500 und ≤ 3000 g/mol, besonders bevorzugt von ≥ 1800 und ≤ 2500 g/mol, ganz besonders bevorzugt von 2000 g/mol.

Das Gewichtsverhältnis der Poly(tetramethylenglykol)polyetherpolyole I zu den Poly(tetramethylenglykol)polyetherpolyolen II liegt bevorzugt im Bereich von ≥ 0,1 und ≤ 10, besonders bevorzugt im Bereich von ≥ 0,2 und ≤ 8, ganz besonders bevorzugt im Bereich von ≥ 1 und ≤ 6.

Die Komponente b) wird bevorzugt in Mengen von ≥ 30 und ≤ 90 Gew.-%, besonders bevorzugt ≥ 50 und ≤ 85 Gew.-% und ganz besonders bevorzugt ≥ 55 und ≤ 75 Gew.-%, bezogen auf das Gesamtgewicht des Polyurethanharnstoffs, eingesetzt.

Bei der Komponente c2) handelt es sich um wenigstens eine aminofunktionelle Verbindung, ausgewählt aus symmetrischen Diaminen, die mindestens zwei isocyanatreaktive Aminogruppen aufweisen, die an primäre und/oder sekundäre C-Atome gebunden sind..

Als Komponente c2) sind beispielsweise geeignet Di- oder Polyamine wie 1,2-Ethylendiamin, 1,2- und 1,3-Diaminopropan, 1,4-Diaminobutan, 1,6-Diaminohexan, Diethylentriamin, 1,3- und 1,4-Xylylendiamin, α,α,α',α'-Tetramethyl-1,3- und -1,4-xylylendiamin und 4,4'-Diaminodicyclohexylmethan (H12-MDA), und/oder 1,2-Dimethylethylendiamin. Ebenfalls möglich sind Hydrazin oder sowie Hydraziden wie Adipinsäuredihydrazid.

Die Verbindungen der Komponente c2) enthalten bevorzugt keine hydrophilierenden Gruppen, insbesondere keine ionisch hydrophilierenden Gruppen.
Bevorzugt ist die Komponente c2) ausgewählt aus Ethylendiamin und/oder H12-MDA, besonders bevorzugt ist die Komponente c2) H12-MDA.

Die Komponente c2) wird bevorzugt in Mengen von ≥ 2 und ≤ 25 Gew.-%, besonders bevorzugt ≥ 5 und ≤ 20 Gew.-% und ganz besonders bevorzugt ≥ 9 und ≤ 16 Gew.-%, bezogen auf das Gesamtgewicht des Polyurethanharnstoffs, eingesetzt.

In einer bevorzugten Ausführungsform der Erfindung ist entweder die Komponente a) H12-MDI oder die Komponente c2) H12-MDA oder die Komponente a) H12-MDI und die Komponente c2) H12-MDA.

Gegebenenfalls wird der Polyurethanharnstoff zudem aufgebaut aus Komponente d), ein oder mehrere Alkohole, die mindestens zwei Hydroxylgruppen und eine Molmasse von ≥ 60 und ≤ 399 g/mol aufweisen, wie beispielsweise Polyole des genannten Molmassenbereichs mit bis zu 20 Kohlenstoffatomen, wie Ethylenglykol, Diethylenglykol, Triethylenglykol, 1,2-Propandiol, 1,3-Propandiol, 1,4-Butandiol, 1,3-Butylenglykol, Cyclohexandiol, 1,4-Cyclohexandimethanol, 1,6-Hexandiol, Neopentylglykol, Hydrochinondihydroxyethylether, Bisphenol A (2,2-Bis(4-hydroxyphenyl)propan), hydriertes Bisphenol A, (2,2-Bis(4-hydroxycyclohexyl)propan), Trimethylolpropan, Glycerin, Pentaerythrit.

Die Komponente d) wird bevorzugt in Mengen von ≥ 0 und ≤ 10 Gew.-%, besonders bevorzugt ≥ 0 und ≤ 3 Gew.-%, bezogen auf das Gesamtgewicht des Polyurethanharnstoffs, und ganz besonders bevorzugt gar nicht eingesetzt.

Weiterhin kann der Polyurethanharnstoff aufgebaut sein aus Komponente e), einer oder mehreren Verbindungen, die eine gegenüber Isocyanatgruppen reaktive Gruppe aufweisen, insbesondere Verbindungen die eine Amino- oder Hydroxygruppe aufweisen. Geeignete Verbindungen der Komponente e) sind beispielsweise Methylamin, Ethylamin, Propylamin, Butylamin, Octylamin, Laurylamin, Stearylamin, Isononyloxypropylamin, Dimethylamin, Diethylamin, Dipropylamin, Dibutylamin, N-Methylaminopropylamin, Diethyl(methyl)aminopropylamin, Morpholin, Piperidin, Methanol, Ethanol, iso-Propanol, n-Propanol, n-Butanol, Ethylenglykolmonobutylether, Diethylenglykolmonomethylether, Diethylenglykolmonobutylether, Propylenglykolmonomethylether, Dipropylenglykol-monomethylether, Tripropylenglykolmonomethylether, Dipropylenglykolmonopropylether, Propylenglykolmonobutylether, Dipropylenglykolmonobutylether, Tripropylenglykolmonobutylether, 2-Ethylhexanol, 1-Octanol, 1-Dodecanol, 1-Hexadecanol.

Komponente e) umfasst bevorzugt keine monofunktionellen Polyetherpolyole, die einen Anteil an Gruppen erhalten aus Ethylenoxid von > 30 Gew.-%, bevorzugt > 50 Gew.-% aufweisen.

Der als Lösemittel für den Polyurethanharnstoff eingesetzte monohydroxyfunktionelle Alkohol kann ebenfalls als Aufbaukomponente e) für den Polyurethanharnstoff dienen.

Die Komponente e) wird, bevorzugt in Mengen, von ≥ 0 und ≤ 10 Gew.-%, besonders bevorzugt ≥ 0 und ≤ 3 Gew.-%, bezogen auf das Gesamtgewicht des Polyurethanharnstoffs, und ganz besonders bevorzugt gar nicht eingesetzt, wobei hier der als Lösemittel für den Polyurethanharnstoff eingesetzte monohydroxyfunktionelle Alkohol als Komponente e) unberücksichtigt bleibt.

Der monohydroxyfunktionelle Alkohol, welcher als Lösemittel für den Polyurethanharnstoff dient, macht bevorzugt ≥ 0 und ≤ 5 Gew.-%, besonders bevorzugt ≥ 0,01 und ≤ 3 Gew.-% und ganz besonders bevorzugt ≥ 0,01 und ≤ 2 Gew.-% der Gesamtmasse des Polyurethanharnstoffs aus.

Gegebenenfalls kann der Polyurethanharnstoff auch aufgebaut sein aus der Komponente f), einem Polyol oder mehreren Polyolen mit einem zahlenmittleren Molekulargewicht Mn ≥ 500 und ≤ 6000 g/mol und einer Hydroxylfunktionalität von ≥ 1,5 und ≤ 4, wobei die Polyole unterschiedlich sind von b).

Die Komponente f) wird bevorzugt in Mengen von ≥ 0 und ≤ 20 Gew.-%, besonders bevorzugt ≥ 0 und ≤ 10 Gew.-%, bezogen auf das Gesamtgewicht des Polyurethanharnstoffs, und ganz besonders bevorzugt gar nicht eingesetzt.

Bevorzugt weisen die Polyole der Komponente f) ein zahlenmittleres Molekulargewicht Mn ≥ 1000 und ≤ 3000 g/mol und einer Hydroxylfunktionalität von ≥ 1,8 und ≤ 3.

Als Komponente f) geeignete Polyole sind die in der Polyurethanlacktechnologie an sich bekannten Polyesterpolyole, Polyacrylatpolyole, Polyurethanpolyole, Polycarbonatpolyole, Polyesterpolyacrylatpolyole, Polyurethanpolyacrylatpolyole, Polyurethanpolyesterpolyole, Polyurethanpolyetherpolyole, Polyurethanpolycarbonatpolyole, Polyetherpolycarbonatpolyole und/oder Polyesterpolycarbonatpolyole, insbesondere Polyesterpolyole und/oder Polycarbonatpolyole..

Polyesterpolyole sind beispielsweise die an sich bekannten Polykondensate aus Di- sowie gegebenenfalls Tri-, und Tetraolen und Di- sowie gegebenenfalls Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele hierfür geeigneter Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopentylglykolester, wobei Hexandiol(1,6) und Isomere, Neopentylglykol und Hydroxypivalinsäureneopentylglykolester bevorzugt sind. Daneben können auch Polyole wie Trimethylolpropan, Glycerin, Erythrit, Pentaerythrit, Trimethylolbenzol oder Trishydroxyethylisocyanurat eingesetzt werden.

Als Dicarbonsäuren können Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbernsteinsäure, 3,3-Diethylglutarsäure und/oder 2,2-Dimethylbernsteinsäure eingesetzt werden. Als Säurequelle können auch die entsprechenden Anhydride verwendet werden.

Sofern die mittlere Hydroxylfunktionalität des zu veresternden Polyols größer als 2 ist, können zusätzlich auch Monocarbonsäuren, wie Benzoesäure und Hexancarbonsäure mit verwendet werden.

Bevorzugte Säuren sind aliphatische oder aromatische Säuren der vorstehend genannten Art. Besonders bevorzugt sind Adipinsäure, Isophthalsäure und gegebenenfalls Trimellithsäure, ganz besonders bevorzugt ist Adipinsäure.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind Caprolacton, Butyrolacton und Homologe. Bevorzugt ist Caprolacton.

In der Komponente f) können auch Hydroxylgruppen aufweisende Polycarbonate, bevorzugt Polycarbonatdiole, mit zahlenmittleren Molekulargewichten Mn von 400 bis 8000 g/mol, bevorzugt von 600 bis 3000 g/mol eingesetzt werden. Diese sind durch Reaktion von Kohlensäurederivaten, wie Diphenylcarbonat, Dimethylcarbonat oder Phosgen, mit Polyolen, bevorzugt Diolen, erhältlich.

Beispiele derartiger Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A und lactonmodifizierte Diole der vorstehend genannten Art. Die Hydroxylgruppen aufweisenden Polycarbonate sind bevorzugt linear gebaut.

Weiterhin bevorzugt ist der Polyurethanharnstoff aufgebaut aus ≥ 5 und ≤ 60 Gew.-% der Komponente a), ≥ 30 und ≤ 90 Gew.-% der Komponente b), ≥ 2 und ≤ 25 Gew.-% der Komponente c2), ≥ 0 und ≤ 10 Gew.-% der Komponente d), ≥ 0 und ≤ 10 Gew.-% der Komponente e) und ≥ 0 und ≤ 20 Gew.-% der Komponente f), wobei sich die Komponenten a) bis f) zu 100 Gew.-% ergänzen. Besonders bevorzugt ist der Polyurethanharnstoff aufgebaut aus ≥ 10 und ≤ 40 Gew.-% der Komponente a), ≥ 55 und ≤ 85 Gew.-% der Komponente b), ≥ 5 und ≤ 20 Gew.-% der Komponente c2), ≥ 0 und ≤ 3 Gew.-% der Komponente d), ≥ 0 und ≤ 3 Gew.-% der Komponente e) und ≥ 0 und ≤ 1 Gew.-% der Komponente f), wobei sich die Komponenten a) bis f) zu 100 Gew.-% ergänzen.

Der erfindungsgemäß verwendete Polyurethanharnstoff weist bevorzugt ein zahlenmittleres Molekulargewicht Mn von ≥ 3000 und ≤ 100000 g/mol, besonders bevorzugt von ≥ 5000 und ≤ 50000 g/mol auf. Polyurethanharnstoffe dieser Molmasse sind besonders geeignet um Beschichtungen mit guten mechanischen Eigenschaften zu erhalten.

In einer bevorzugten Ausführungsform der Erfindung ist der erfindungsgemäß verwendete Polyurethanharnstoff aufgebaut aus
a) wenigstens einem aliphatischen, araliphatischen und/oder cycloaliphatischen Diisocyanat, das mindestens eine Isocyanatgruppe aufweist, die an ein sekundäres und/oder tertiäres C-Atom gebunden ist,
b) wenigstens einem Polyetherpolyol mit einem zahlenmittleren Molekulargewicht Mn ≥ 500 und ≤ 2500 g/mol und einer Hydroxylfunktionalität von ≥ 1,9 und ≤ 3,
   c2) wenigstens einer aminofunktionellen Verbindung, ausgewählt aus symmetrischen Diaminen, die mindestens zwei isocyanatreaktive Aminogruppen aufweisen, die an primäre und/oder sekundäre C-Atome gebunden sind,
d) gegebenenfalls wenigstens ein Alkohol, der mindestens zwei Hydroxylgruppen und eine Molmasse ≥ 60 und ≤ 399 g/mol aufweist,
e) gegebenenfalls wenigstens eine Verbindung die eine gegenüber Isocyanatgruppen reaktive Gruppe aufweist und
f) gegebenenfalls ≤ 20 Gew.-%, bezogen auf die Gesamtmasse des Polyurethanharnstoffs, an wenigstens einem Polyol mit einer zahlenmittleren Molekulargewicht Mn ≥ 500 und ≤ 6000 g/mol und einer Hydroxylfunktionalität von ≥ 1,5 und ≤ 4, welches unterschiedlich ist von b).

Weiterhin bevorzugt ist der Polyurethanharnstoff in dieser vorgenannten Ausführungsform aufgebaut aus ≥ 5 und ≤ 60 Gew.-% der Komponente a), ≥ 30 und ≤ 90 Gew.-% der Komponente b), ≥ 2 und ≤ 25 Gew.-% der Komponente c2), ≥ 0 und ≤ 10 Gew.-% der Komponente d), ≥ 0 und ≤ 10 Gew.-% der Komponente e) und ≥ 0 und ≤ 20 Gew.-% der Komponente f), jeweils bezogen auf die Gesamtmasse des Polyurethanharnstoffs, wobei sich die Komponenten a) bis f) zu 100 Gew.-% ergänzen.

Besonders bevorzugt ist der Polyurethanharnstoff in dieser vorgenannten Ausführungsform aufgebaut aus ≥ 10 und ≤ 40 Gew.-% der Komponente a), ≥ 55 und ≤ 85 Gew.-% der Komponente b), ≥ 5 und ≤ 20 Gew.-% der Komponente c2), ≥ 0 und ≤ 3 Gew.-% der Komponente d), ≥ 0 und ≤ 3 Gew.-% der Komponente e) und ≥ 0 und ≤ 1 Gew.-% der Komponente f), jeweils bezogen auf die Gesamtmasse des Polyurethanharnstoffs, wobei sich die Komponenten a) bis f) zu 100 Gew.-% ergänzen.

In einer besonders bevorzugten Ausführungsform der Erfindung ist der erfindungsgemäß verwendete Polyurethanharnstoff aufgebaut aus
a) wenigstens einem Diisocyanat ausgewählt aus IPDI und/oder H12-MDI,
b) wenigstens einem Polyetherpolyol mit einem zahlenmittleren Molekulargewicht Mn ≥ 500 und ≤ 2500 g/mol und einer Hydroxylfunktionalität von ≥ 1,9 und ≤ 3, ausgewählt aus Polypropylenglykolen und/oder Poly(tetramethylenglykol)polyetherpolyolen,
   c2) wenigstens einer aminofunktionellen Verbindung, und ausgewählt ist aus Ethylendiamin und/oder H12-MDA,
d) gegebenenfalls wenigstens ein Alkohol, der mindestens zwei Hydroxylgruppen und eine Molmasse ≥ 60 und ≤ 399 g/mol aufweist,
e) gegebenenfalls wenigstens eine Verbindung die eine gegenüber Isocyanatgruppen reaktive Gruppe aufweist und
f) gegebenenfalls ≤ 20 Gew.-%, bezogen auf die Gesamtmasse des Polyurethanharnstoffs, an wenigstens einem Polyol mit einer zahlenmittleren Molekulargewicht Mn ≥ 500 und ≤ 6000 g/mol und einer Hydroxylfunktionalität von ≥ 1,5 und ≤ 4, welches unterschiedlich ist von b).

Weiterhin bevorzugt ist der Polyurethanharnstoff in dieser vorgenannten Ausführungsform aufgebaut aus ≥ 5 und ≤ 60 Gew.-% der Komponente a), ≥ 30 und ≤ 90 Gew.-% der Komponente b), ≥ 2 und ≤ 25 Gew.-% der Komponente c2), ≥ 0 und ≤ 10 Gew.-% der Komponente d), ≥ 0 und ≤ 10 Gew.-% der Komponente e) und ≥ 0 und ≤ 20 Gew.-% der Komponente f), jeweils bezogen auf die Gesamtmasse des Polyurethanharnstoffs, wobei sich die Komponenten a) bis f) zu 100 Gew.-% ergänzen.

Besonders bevorzugt ist der Polyurethanharnstoff in dieser vorgenannten Ausführungsform aufgebaut aus ≥ 10 und ≤ 40 Gew.-% der Komponente a), ≥ 55 und ≤ 85 Gew.-% der Komponente b), ≥ 5 und ≤ 20 Gew.-% der Komponente c2), ≥ 0 und ≤ 3 Gew.-% der Komponente d), ≥ 0 und ≤ 3 Gew.-% der Komponente e) und ≥ 0 und ≤ 1 Gew.-% der Komponente f), jeweils bezogen auf die Gesamtmasse des Polyurethanharnstoffs wobei sich die Komponenten a) bis f) zu 100 Gew.-% ergänzen.

Bevorzugt ist der Polyurethanharnstoff ausschließlich aufgebaut aus den Komponenten a) bis c2) und gegebenenfalls d) bis f), besonders bevorzugt ausschließlich aus den Komponenten a) bis c2).

Als Lösemittel oder Bestandteil des Lösemittelgemisches geeignet sind prinzipiell alle monohydroxyfunktionellen, aliphatischen Alkohole mit einem bis sechs Kohlenstoffatomen, wie beispielsweise Methanol, Ethanol, n-Propanol, iso-Propanol, n-Butanol, sec.-Butanol oder Butylglykol. Besonders bevorzugt handelt es sich bei dem monohydroxyfunktionellen Alkohol um Ethanol oder iso-Propanol, ganz besonders bevorzugt um iso-Propanol.
Wird ein Lösemittelgemisch eingesetzt, so können neben den monohydroxyfunktionellen Alkoholen noch ≤ 8 Gew.-% eines weiteren organischen Lösemittels eingesetzt werden. Geeignete Lösemittel sind dabei sind beispielsweise Ester, wie z.B. Ethylacetat, Butylacetat, Methyoxypropylacetat oder Butyrolacton, Ketone, wie z.B. Aceton oder Methylethylketon, Ether, wie z.B. Tetrahydrofuran oder tert.-Butylmethylether, aromatische Lösungsmittel, wie z.B. Xylol oder Solvent Naphtha. Im Falle der Verwendung von Ethanol können typische Vergällungsmittel als Additive in den üblichen Zuschlagmengen enthalten sein.

Bevorzugt beträgt der Anteil der weiteren organischen Lösemittel ≤ 5 Gew.-%, besonders bevorzugt ≤ 2 Gew.-% und ganz besonders bevorzugt ≤ 1 Gew.-%, bezogen auf die Gesamtmasse des Lösemittelgemisches. In einer ganz besonders bevorzugten Ausführungsform sind neben monohydroxyfunktionellen, aliphatischen Alkoholen keinerlei weitere organische Lösemittel enthalten.

Als weitere Lösemittel unvorteilhaft sind Lösemittel wie beispielsweise Dimethylformamid, N-Methylpyrrolidon oder Toluol, wie sie als Colösemittel für Polyurethane oder Polyurethanharnstoffe eingesetzt werden.

Bei den weiteren Lösemitteln handelt es sich auch nicht um Wasser. Die durch Lösen des Polyurethanharnstoffs in den erfindungsgemäß verwendeten Lösemitteln oder Lösemittelgemischen erhaltene Polyurethanharnstofflösung ist bevorzugt wasserfrei, ausgenommen der Anteile an Wasser, die in den eingesetzten organischen Lösemitteln herstellungsbedingt enthalten sind.

Der Wasseranteil der Polyurethanharnstofflösung liegt bevorzugt bei ≤ 8 Gew.-%, besonders bevorzugt bei ≤ 4,5 Gew.-% und ganz besonders bevorzugt bei ≤ 1 Gew.-%, bezogen auf die Gesamtmasse der Polyurethanharnstofflösung.

Der Anteil des Polyurethanharnstoffs an der erfindungsgemäß eingesetzten Polyurethanharnstofflösung (auch bezeichnet als Feststoffgehalt) liegt dabei bevorzugt ≥ 10 und ≤ 80 Gew.-%, besonders bevorzugt ≥ 15 und ≤ 60 Gew.-% und ganz besonders bevorzugt bei ≥ 20 und ≤ 50 Gew.-%, bezogen auf das Gesamtgewicht der Polyurethanharnstofflösung.

Bevorzugt handelt es sich bei dem erfindungsgemäßen gelösten Polyurethanharnstoff um eine klare, lagerstabile Lösung.
Klar bedeutet im Sinne der vorliegenden Erfindung, dass die Trübungswerte der Lösung ≤ 200 NTU (Nephelometric Turbidity Unit), bevorzugt ≤ 50 NTU, besonders bevorzugt ≤ 10 NTU und ganze besonders bevorzugt ≤ 3 NTU sind. Die Trübungswerte werden dabei durch eine Streulichtmessung im 90°-Winkel (Nephelometrie) bei einer Wellenlänge der Mess-Strahlung 860 nm entsprechend DIN EN ISO 7027 bestimmt, durchgeführt bei 23°C mit einem Labortrübungsmessgerät Modell 2100AN der Firma HACH LANGE GmbH, Berlin, Deutschland.
Unter Lagerstabil wir im Sinne der vorliegenden Erfindung verstanden, wenn die Lösung auch nach mindestens 3 Wochen, bevorzugt aber auch nach 3 Monaten keine Eintrübung und keine erhöhte Viskosität im Vergleich zum Ausgangszustand aufweist.

Die vorliegende Erfindung umfasst ebenfalls ein Verfahren zur Herstellung des erfindungsgemäßen Polyurethanharnstoffs, wobei die Komponenten a) und b) sowie gegebenenfalls d) und f) in einem ersten Schritt zu einem NCO-terminierten Präpolymer umgesetzt und dann dieses in einem weiteren Schritt mit der Komponente c2) sowie gegebenenfalls den Komponenten d) und e) umgesetzt wird.

Bevorzugt wird im erfindungsgemäßen Verfahren das NCO-terminierte Präpolymer vorgelegt und die Komponente c2), sowie gegebenenfalls die Komponenten d) und e) zugegeben.

Im erfindungsgemäßen Verfahren werden bevorzugt die Komponenten a) und b) sowie gegebenenfalls d) und f) zur Herstellung eines NCO-terminierten Präpolymers ganz oder teilweise vorgelegt, gegebenenfalls mit einem gegenüber Isocyanatgruppen inerten Lösungsmittel verdünnt und auf Temperaturen im Bereich von 50 bis 120°C aufgeheizt. Zur Beschleunigung der Isocyanatadditionsreaktion können die in der Polyurethan-Chemie bekannten Katalysatoren eingesetzt werden. In einer bevorzugten Variante wird jedoch ohne den Zusatz von Urethanisierungs-Katalysatoren gearbeitet.

Anschließend können die gegebenenfalls zu Beginn der Reaktion noch nicht zugegebenen Bestandteile von a) und b) sowie gegebenenfalls d) und f) zudosiert werden.

Bei der Herstellung der NCO-terminierten Präpolymere aus den Komponenten a) und b) sowie gegebenenfalls d) und f) beträgt das Stoffmengenverhältnis von Isocyanat-Gruppen zu isocyanatreaktiven Gruppen bevorzugt ≥ 1,05 und ≤ 3,5, besonders bevorzugt ≥ 1,1 und ≤ 3,0 und ganz besonders bevorzugt ≥ 1,1 und ≤ 2,5.

Die Umsetzung der Komponenten a) und b) sowie gegebenenfalls d) und f) zum Präpolymer erfolgt teilweise oder vollständig, bevorzugt aber vollständig. Es werden so Polyurethan-Präpolymere, die freie Isocyanatgruppen enthalten, in Substanz oder in Lösung erhalten.
Bevorzugt wir das NCO-terminierte Präpolymer ausschließlich aus den Komponenten a) und b) hergestellt.
Im Anschluss wird bevorzugt in einem weiteren Verfahrensschritt, falls noch nicht oder nur teilweise geschehen, das erhaltene Präpolymer mit Hilfe von einem oder mehreren organischen Lösemitteln gelöst. Als Lösemittel wird dabei bevorzugt ebenfalls ein Lösemittel oder Lösemittelgemisch eingesetzt, wobei das Lösemittel ausschließlich aus einem oder mehreren monohydroxyfunktionellen Alkoholen besteht oder ein Lösemittelgemisch bestehend aus ausschließlich organischen Lösemitteln, welches ≥ 50 Gew.-%, bezogen auf die Gesamtmasse des Lösemittelgemisches, an wenigstens einem monohydroxyfunktionellen Alkohol enthält, verwendet wird. Für das Lösemittel und das Lösemittelgemisch gelten ebenfalls die vorstehenden bevorzugten Ausführungsformen zum Lösemittel oder Lösemittelgemisch in dem der Polyurethanharnstoff gelöst ist. Das Lösemittel oder Lösemittelgemisch kann dabei auch von dem Lösemittel oder Lösemittelgemisch, in dem der Polyurethanharnstoff gelöst ist verschieden sein.
Das Lösemittel oder Lösemittelgemisch kann dabei auch von dem Lösemittel oder Lösemittelgemisch, in dem der Polyurethanharnstoff als Endprodukt später gelöst ist, verschieden sein. Bevorzugt ist das Lösemittel oder Lösemittelgemisch identisch mit dem Lösemittel oder Lösemittelgemisch, in dem der Polyurethanharnstoff als Endprodukt später gelöst ist.
Bevorzugt besteht das bei der Herstellung eingesetzte Lösemittel aus einem oder mehreren monohydroxyfunktionellen Alkoholen.
Das Verhältnis von Lösemittel zu Präpolymer liegt dabei bevorzugt bei ≥ 1:10 und ≤ 5:1, besonders bevorzugt bei ≥ 1:2 und ≤ 2:1 Gewichtsteilen.
Das Präpolymer wird bevorzugt vor dem Lösen abgekühlt auf Temperaturen von -20 bis 60°C, vorzugsweise 0 bis 50 °C und besonders bevorzugt von 15 bis 40°C.

In einem, sich gegebenenfalls an das Lösen des NCO-terminierten Präpolymers anschließenden, weiteren Schritt wird bevorzugt dann das im ersten Schritt erhaltene NCO-terminierte Präpolymer ganz oder teilweise mit der Komponente c2) sowie gegebenenfalls den Komponenten d) und e) umgesetzt. Diese Umsetzung wird im allgemeinen als Kettenverlängerung, bzw. im Fall der Komponente e) als Kettenabbruch bezeichnet.
Bevorzugt wird dabei das NCO-terminierte Präpolymer vorgelegt und die Komponenten c2) sowie gegebenenfalls d) und e) zudosiert. Bevorzugt erfolgt zunächst eine teilweise Umsetzung der NCO-Gruppen des Präpolymers mit den Komponenten c2) und gegebenenfalls d) und im Anschluss der Kettenabbruch durch Umsetzung der verbleibenden NCO Gruppen mit der Komponente e). Die Komponenten c2) und gegebenenfalls e) können dabei auch stufenweise in mehreren Schritten, insbesondere in zwei Schritten, zugegeben werden.
Die Komponente c2) sowie gegebenenfalls d) und e) werden bevorzugt gelöst in einem oder mehreren organischen Lösemitteln eingesetzt. Als Lösemittel wird dabei bevorzugt ebenfalls ein Lösemittel oder Lösemittelgemisch eingesetzt, wobei das Lösemittel ausschließlich aus einem oder mehreren monohydroxyfunktionellen Alkoholen besteht oder ein Lösemittelgemisch bestehend aus ausschließlich organischen Lösemitteln, welches ≥ 50 Gew.-%, bezogen auf die Gesamtmasse des Lösemittelgemisches, an wenigstens einem monohydroxyfunktionellen Alkohol enthält, verwendet wird. Für das Lösemittel und das Lösemittelgemisch gelten ebenfalls die nachstehenden bevorzugten Ausführungsformen zum Lösemittel oder Lösemittelgemisch in dem der Polyurethanharnstoff gelöst ist. Das Lösemittel oder Lösemittelgemisch kann dabei auch von dem Lösemittel oder Lösemittelgemisch, in dem der Polyurethanharnstoff als Endprodukt später gelöst ist, verschieden sein. Bevorzugt ist das Lösemittel oder Lösemittelgemisch identisch mit dem Lösemittel oder Lösemittelgemisch, in dem der Polyurethanharnstoff als Endprodukt später gelöst ist.
Bevorzugt besteht das bei der Herstellung eingesetzte Lösemittel für Komponente c2) aus einem oder mehreren monohydroxyfunktionellen Alkoholen.

Wenn Lösemittel als Verdünnungsmittel verwendet werden, so beträgt der Verdünnungsmittelgehalt in der bei der Kettenverlängerung eingesetzten Komponenten c2), sowie gegebenenfalls d) und e) bevorzugt 1 bis 95 Gew.-%, besonders bevorzugt 3 bis 50 Gew.%, bezogen auf das Gesamtgewicht der Komponente c2) sowie gegebenenfalls d) und e) einschließlich Verdünnungsmittel.

Die Zugabe der Komponenten c2) sowie gegebenenfalls d) und e) erfolgt bevorzugt bei Temperaturen von -20 bis 60°C, vorzugsweise 0 bis 50 und besonders bevorzugt von 15 bis 40°C.

Der Kettenverlängerungsgrad, also das molare Verhältnis von NCO-reaktiven Gruppen der zur Kettenverlängerung und Kettenabbruch eingesetzten Komponenten c2) sowie gegebenenfalls d) und e) zu freien NCO-Gruppen des Präpolymers, ist insbesondere ≥ 50 und ≤ 150%, bevorzugt ≥ 50 und ≤ 120%, besonders bevorzugt ≥ 60 und ≤ 100% und ganz besonders bevorzugt ≥ 70 und ≤ 95%.

Bevorzugt beträgt das molare Verhältnis der isocyanatreaktiven Gruppen der Komponente c2) zu den freien NCO-Gruppen des Präpolymers ≥50 und ≤ 150%, bevorzugt ≥50 und ≤ 120%, besonders bevorzugt ≥ 60 und ≤ 100% und ganz besonders bevorzugt ≥ 70 und ≤ 95%.

In einer bevorzugten Ausführungsform der Erfindung werden die freien NCO-gruppen des Präpolymers nur teilweise mit der Komponente c2) umgesetzt, bevorzugt beträgt dabei das molare Verhältnis der isocyanatreaktiven Gruppen der Komponente c2) zu den freien NCO-Gruppen des Präpolymers ≥ 60 und ≤ 95% und die verbleibenden freien NCO Gruppen reagieren mit den Hydroxygruppen des Lösemittels ab, so dass ein NCO freier Polyurethanharnstoff entsteht.

Im Anschluss an die Herstellung kann der Polyurethanharnstoff, sofern im Herstellungsverfahren bereits erfindungsgemäße Lösemittel oder Lösemittelgemische eingesetzt wurden, weiterhin mit einem Lösemittel oder Lösemittelgemisch verdünnt und dabei gelöst werden, wobei das Lösemittel ausschließlich aus einem oder mehreren monohydroxyfunktionellen Alkoholen besteht oder ein Lösemittelgemisch bestehend aus ausschließlich organischen Lösemitteln, welches ≥ 50 Gew.-%, bezogen auf die Gesamtmasse des Lösemittelgemisches, an wenigstens einem monohydroxyfunktionellen Alkohol enthält, verwendet wird.

Wurden währen der Umsetzung keine erfindungsgemäßen Lösemittel oder Lösemittelgemische eingesetzt, so wird im Anschluss an die Herstellung des Polyurethanharnstoffs dieser in einem Lösemittel oder Lösemittelgemisch eingesetzt, wobei das Lösemittel ausschließlich aus einem oder mehreren monohydroxyfunktionellen Alkoholen besteht oder ein Lösemittelgemisch bestehend aus ausschließlich organischen Lösemitteln, welches ≥ 92 Gew.-%, bezogen auf die Gesamtmasse des Lösemittelgemisches, an wenigstens einem monohydroxyfunktionellen Alkohol enthält, verwendet wird.

Das Lösen des Polyurethanharnstoffs kann mit den üblichen Techniken zur Scherung erfolgen, beispielsweise durch Rühren mit Standard-Rührern, beispielsweise wie in DIN 28131 genannt.

Die vorliegende Erfindung umfasst weiterhin einen Polyurethanharnstoff, erhältlich nach dem erfindungsgemäßen Herstellungsverfahren.

Ein weiterer Gegenstand der Erfindung ist die Verwendung des erfindungsgemäßen Polyurethanharnstoffes zur Beschichtung von Substraten.

Geeignete Substrate sind beispielsweise textile Materialien, Flächensubstrate aus Metall, Glas, Keramik, Beton, Naturstein, Leder, Naturfasern, und Kunststoffen wie PVC, Polyolefine, Polyurethan oder ähnliches. Bevorzugt sind die Substrate textile Materialien und/oder Leder.

Besonders bevorzugt handelt es sich bei den Substraten um textile Flächengebilde, insbesondere bevorzugt um faserartige Materialien.

Unter textilen Flächengebilden im Sinne der vorliegenden Erfindung sind beispielsweise Gewebe, Gewirke, gebundene und ungebundene Vliese zu verstehen. Die textilen Flächengebilde können aus synthetischen, natürlichen Fasern und/oder deren Mischungen aufgebaut sein.

Insbesondere bevorzugt ist die Verwendung des erfindungsgemäßen Polyurethanharnstoffes zur Beschichtung bzw. Herstellung von Oberbekleidung, Kunstlederartikeln, Schuhen, Möbelbezugsstoffen, Automobil-Innenausstattungsartikeln, Sportgeräten, textilen Materialien für Bauanwendungen, Planen, Zelten und Industrietextilien wie beispielsweise Förderbändern.

Ein weiterer Gegenstand der Erfindung ist die Verwendung des erfindungsgemäßen Polyurethanharnstoffs zur Herstellung von freien Filmen. Dies erfolgt ebenbevorzugt falls durch Beschichtung von Substraten, insbesondere von Formkörpern. Unter freien Filmen werden Filme verstanden, die von ihrem Träger ablösbar sind und unabhängig vom Trägermaterial verwendet werden können. Bevorzugt handelt es sich um durchgängige, kompakte Filme.

Die freien Filme können hergestellt werden durch Aufsprühen oder im Tauchverfahren.

Bevorzugt werden die freien Filme im Tauchverfahren hergestellt. Ein Formkörper, bevorzugt aus Glas, keramischen Materialien oder Metall kann dabei in die Polyurethanharnstofflösung eingetaucht werden. Durch Koagulation der Polyurethanharnstofflösung kann dann ein freier Film, der ohne Trägermaterial verwendet werden kann, hergestellt werden. Die Koagulation erfolgt dabei bevorzugt durch in Kontaktbringen mit einem die Koagulation auslösenden Medium, insbesondere mit Wasser.

Weiterhin Gegenstand der Erfindung sind freie Filme, hergestellt unter Verwendung des erfindungsgemäßen Polyurethanharnstoffs, insbesondere bevorzugt hergestellt im Tauchverfahren.

Die erhaltenen Filme weisen bevorzugt eine Schichtdicke von ≥ 0,005 und ≤ 1 mm, besonders bevorzugt ≥ 0,03 und ≤ 0,1 mm auf. Die erfindungsgemäßen Filme sind geeignet zur Herstellung von beispielsweise Kondomen, Luftballons, Handschuhen und/oder Schutzhüllen.

Gegenstand der Erfindung ist ein Polyurethanharnstoff, welcher gelöst ist in einem Lösemittel oder Lösemittelgemisch, wobei das Lösemittel ausschließlich aus einem oder mehreren monohydroxyfunktionellen Alkoholen besteht oder ein Lösemittelgemisch bestehend aus ausschließlich organischen Lösemitteln, welches ≥ 92 Gew.-%, bezogen auf die Gesamtmasse des Lösemittelgemisches, an wenigstens einem monohydroxyfunktionellen Alkohol enthält, verwendet wird, dadurch gekennzeichnet, dass der Polyurethanharnstoff aufgebaut ist aus
a) wenigstens einem araliphatischen, aliphatischen und/oder cycloaliphatischen Diisocyanat,
b) wenigstens einem Polyetherpolyol mit einem zahlenmittleren Molekulargewicht Mn ≥ 400 und ≤ 6000 g/mol, bestimmt mittels GPC bei 23 °C in THF, und einer mittleren Hydroxylfunktionalität von ≥ 1,5 und ≤ 4,
   c2) wenigstens einer aminofunktionellen Verbindung, ausgewählt aus symmetrischen Diaminen, die mindestens zwei isocyanatreaktive Aminogruppen aufweisen, die an primäre und/oder sekundäre C-Atome gebunden sind,
d) gegebenenfalls wenigstens einem Alkohol, der mindestens zwei Hydroxylgruppen und eine Molmasse ≥ 60 und ≤ 399 g/mol aufweist,
e gegebenenfalls wenigstens einer Verbindung die eine gegenüber Isocyanatgruppen reaktive Gruppe aufweist,
f) gegebenenfalls ≤ 20 Gew.-%, bezogen auf die Gesamtmasse des Polyurethanharnstoffs, an wenigstens einem Polyole mit einem zahlenmittleren Molekulargewicht Mn ≥ 500 und ≤ 6000 g/mol und einer mittleren Hydroxylfunktionalität von ≥ 1,5 und ≤ 4, welches unterschiedlich ist von b).

In einer ersten bevorzugten Ausführungsform des erfindungsgemäßen Polyurethanharnstoffs ist die Komponente b) ausgewählt ist aus Poly(tetramethylenglykol)polyetherpolyolen.

Eine zweite bevorzugte Ausführungsform der Erfindung umfasst einen Polyurethanharnstoff gemäß einer der vorstehend genannten Ausführungsformen der Erfindung, dadurch gekennzeichnet, dass die Komponente a) ausgewählt ist aus aliphatischen und/oder cycloaliphatischen Diisocyanaten, welche mindestens eine Isocyanatgruppe aufweisen, die an ein sekundäres und/oder tertiäres C-Atom gebunden ist.

Eine dritte bevorzugte Ausführungsform der Erfindung umfasst einen Polyurethanharnstoff gemäß einer der vorstehend genannten Ausführungsformen der Erfindung, dadurch gekennzeichnet, dass die Komponente a) ausgewählt ist aus IPDI und/oder H12-MDI.

Eine vierte bevorzugte Ausführungsform der Erfindung umfasst einen Polyurethanharnstoff gemäß einer der vorstehend genannten Ausführungsformen der Erfindung, dadurch gekennzeichnet, dass die Komponente b) eine zahlenmittlere Molekulargewicht Mn ≥ 500 und ≤ 2500 g/mol und eine Hydroxylfunktionalität von ≥ 1,9 und ≤ 3 aufweist.

Eine fünfte bevorzugte Ausführungsform der Erfindung umfasst einen Polyurethanharnstoff gemäß einer der vorstehend genannten Ausführungsformen der Erfindung, dadurch gekennzeichnet, dass die Komponente a) ausgewählt ist aus aliphatischen, araliphatischen und/oder cycloaliphatischen Diisocyanaten, welche mindestens eine Isocyanatgruppe aufweisen, die an ein tertiäres C-Atom gebunden ist.

Eine sechste bevorzugte Ausführungsform der Erfindung umfasst einen Polyurethanharnstoff gemäß einer der vorstehend genannten Ausführungsformen der Erfindung, dadurch gekennzeichnet, dass die Komponente a) ausgewählt ist aus IPDI und/oder H12-MDI.

Eine siebte bevorzugte Ausführungsform der Erfindung umfasst einen Polyurethanharnstoff gemäß einer der vorstehend genannten Ausführungsformen der Erfindung, dadurch gekennzeichnet, dass die Komponente c2) ausgewählt ist aus Ethylendiamin und/oder H12-MDA.

Eine achte bevorzugte Ausführungsform der Erfindung umfasst einen Polyurethanharnstoff gemäß einer der vorstehend genannten Ausführungsformen der Erfindung, dadurch gekennzeichnet, dass das Lösemittelgemisch ≥ 99 Gew.-% an monohydroxyfunktionellen Alkoholen enthält.

Eine neunte bevorzugte Ausführungsform der Erfindung umfasst einen Polyurethanharnstoff gemäß einer der vorstehend genannten Ausführungsformen der Erfindung, dadurch gekennzeichnet, dass die monohydroxyfunktionellen Alkohole ausgewählt sind aus aliphatischen Alkohole mit ≥ 1 und ≤ 6 Kohlenstoffatomen.

Eine zehnte bevorzugte Ausführungsform der Erfindung umfasst einen Polyurethanharnstoff gemäß einer der vorstehend genannten Ausführungsformen der Erfindung, dadurch gekennzeichnet, dass der monohydroxyfunktionelle Alkohol Ethanol und/oder Iso-Propanol ist.

Eine elfte bevorzugte Ausführungsform der Erfindung umfasst einen Polyurethanharnstoff gemäß einer der vorstehend genannten Ausführungsformen der Erfindung, dadurch gekennzeichnet, dass der monohydroxyfunktionelle Alkohol Ethanol und/oder iso-Propanol ist.

Die vorliegende Erfindung umfasst ebenfalls ein Verfahren zur Herstellung des erfindungsgemäßen Polyurethanharnstoffs, wobei die Komponenten a) und b) sowie gegebenenfalls d) und f) in einem ersten Schritt zu einem NCO-terminierten Präpolymer umgesetzt und dann dieses in einem weiteren Schritt mit der Komponente c2) sowie gegebenenfalls den Komponenten d) und e) umgesetzt wird.

Eine bevorzugte Ausführungsform der Erfindung umfasst ein Verfahren gemäß der vorstehend genannten Ausführungsform der Erfindung, dadurch gekennzeichnet, dass das NCO-terminierte Präpolymer vorgelegt und die Komponente c), sowie gegebenenfalls die Komponenten d) und e) zugegeben werden.

Eine weitere bevorzugte Ausführungsform der Erfindung umfasst ein Verfahren gemäß einer der vorstehend genannten Ausführungsformen der Erfindung, dadurch gekennzeichnet, dass das molare Verhältnis der isocyanatreaktiven Gruppen der Komponente c) zu den freien NCO-Gruppen des Präpolymers ≥ 70 und ≤ 95% ist.

Die vorliegende Erfindung umfasst ebenfalls einen Polyurethanharnstoff erhältlich nach einer der vorstehend genannten Ausführungsformen des erfindungsgemäßen Verfahrens.

Die vorliegende Erfindung wird an Hand der folgenden Beispiele erläutert.

### Beispiele:

Sofern nicht abweichend gekennzeichnet, beziehen sich alle Prozentangaben auf das Gewicht.

Sofern nicht abweichend vermerkt, beziehen alle analytischen Messungen auf Temperaturen von 23°C.
Die Bestimmung der Festkörpergehalte (nicht-flüchtiger Anteil) erfolgte nach DIN-EN ISO 3251.

NCO-Gehalte wurden, wenn nicht ausdrücklich anders erwähnt, volumetrisch gemäß DIN-EN ISO 11909 bestimmt.

Die Kontrolle auf freie NCO-Gruppen wurde mittels IR-Spektroskopie (Bande bei 2260 cm⁻¹) durchgeführt.

Die angegebenen Viskositäten wurden mittels Rotationsviskosimetrie nach DIN 53019 bei 23°C mit einem Rotationsviskosimeter der Firma Anton Paar Germany GmbH, Ostfildern, DE bestimmt.

Das zahlenmittlere Molekulargewicht wird im Rahmen dieser Anmeldung stets bestimmt durch Gelpermeationschromatographie (GPC) in Tetrahydrofuran bei 23°C. Es wird dabei vorgegangen nach DIN 55672-1: "Gelpermeationschromatographie, Teil 1 - Tetrahydrofuran als Elutionsmittel" (SECurity GPC-System von PSS Polymer Service, Flussrate 1,0 ml/min; Säulen: 2×PSS SDV linear M, 8×300 mm, 5 µm; RID-Detektor). Dabei werden Polystyrolproben bekannter Molmasse zur Kalibrierung verwendet. Die Berechnung des zahlenmittleren Molekulargewichts erfolgt softwaregestützt. Basislinienpunkte und Auswertegrenzen werden entsprechend der DIN 55672 Teil 1 festgelegt.

Zur Prüfung wurde von einigen der Lösungen ein 500 µm (bezogen auf den Zustand mit Lösemittel) dicker Film auf mattem Trennpapier appliziert. Die Trocknung erfolgte bei 50°C, anschließend wurde 3 Minuten bei 150°C getempert. Die erhaltenen Filme wurden einer Zug-Dehnungs-Prüfung entsprechend DIN 53504 unterzogen. Die Zugversuche wurden mittels einer Zugmaschine der Firma Zwick, Modell Nummer 1455, ausgestattet mit einer Kraftmessdose des Gesamtmessbereiches 500 N nach DIN 53455 mit einer Zuggeschwindigkeit von 50 mm/min ausgeführt. Als Probekörper wurden S2-Zugstäbe eingesetzt. Jede Messung wurde an drei gleichartig präparierten Probekörpern ausgeführt und der Mittelwert der erhaltenen Daten zur Bewertung verwendet. Speziell hierfür wurden neben der Bruchspannung BS in [MPa] und der Bruchdehnung BD in [%], die Spannung SP in [MPa] bei 100% Dehnung bestimmt (100%Modul).
Weiterhin wurden die Quellung in Wasser bei 23 °C (16 Stunden) durch Differenzwägung gemessen und die jeweilige Gewichtszunahme in Prozent angegeben. Teilweise wurden Tests auf Lagerung unter Wasser (bei 23 °C) oder im fechten Klima (70°C) gemacht und die jeweiligen Werte für die Bruchspannung und die Bruchdehnung analog der oben beschriebenen Vorgehensweise bestimmt.

Die Trübungswerte [NTU] wurden durch eine Streulichtmessung im 90°-Winkel (Nephelometrie) bei einer Wellenlänge der Mess-Strahlung 860 nm entsprechend DIN EN ISO 7027 bestimmt, durchgeführt bei 23°C mit einem Labortrübungsmessgerät Modell 2100AN der Firma HACH LANGE GmbH, Berlin, Deutschland.

### Verwendete Substanzen und Abkürzungen:

| | |
|---|---|
| PolyTHF® 2000: | Polytetramethylenglykolpolyol, OH-Zahl 56 mg KOH/g, zahlenmittleres Molekulargewicht 2000 g/mol (BASF AG, Ludwigshafen, DE) |
| PolyTHF® 1000: | Polytetramethylenglykolpolyol, OH-Zahl 112 mg KOH/g, zahlenmittleres zahlenmittleres Molekulargewicht 1000 g/mol (BASF AG, Ludwigshafen, DE) |
| Ethanol | Soweit nicht anderweitig gekennzeichnet wurde mit MEK vergälles Ethanol der Fa. Nordbrand, Nordhausen, DE eingesetzt. |

Isocyanate und die weiteren polymeren Polyole wurden eingesetzt von der Bayer MaterialScience AG, Leverkusen, DE. Weitere Chemikalien von Sigma-Aldrich Chemie GmbH, Taufkirchen, DE. Die Rohstoffe wurden, soweit nicht anders erwähnt, ohne weitere Reinigung oder Vorbehandlung eingesetzt.

**Beispiel 1: Herstellung einer Polyurethanharnstoff-Lösung in Ethanol (erfindungsgemäß)**

150 g PolyTHF® 2000 und 37,50 g PolyTHF® 1000 wurden in einer Standard-Rührapparatur für eine Stunde bei 100°C im Membranpumpenvakuum entwässert und anschließend unter Stickstoff bei 80°C vorgelegt. Dann wurde bei 80°C innerhalb von 5 min 75,06 g Isophorondiisocyanat zugegeben und es wurde bei 110°C so lange gerührt (ca. 3 Stunden), bis der theoretische NCO-Wert unterschritten war. Das Prepolymer wurde auf 40°C abgekühlt und es wurde in 630,4 g Ethanol (vergällt mit Diethylphthalat) gelöst und anschliessend wurde die Temperatur auf 15°C reduziert. Dann wurde eine Lösung aus 37,6 g Methylenbis(4-aminocyclohexan) (H12-MDA) und 270 g Ethanol (vergällt mit Diethylphthalat) innerhalb von 30 min zudosiert. Es wurde weiter gerührt, bis IR-spektroskopisch keine freien Isocyanatgruppen mehr feststellbar waren.

Die erhaltene klare, lagerstabile Lösung hatte nachfolgende Eigenschaften:

| | |
|---|---|
| Feststoffgehalt: | 23 % |
| Viskosität (Viskosimeter, 23°C): | 280 mPas |
| Trübungswert: | 1,2 NTU |

Die Lösung wurde auf eine Glasplatte beschichtet (Rakel mit 210 micrometer Rakelspalt) und nach Trocknung bei Raumtemperatur ergab sich ein abziehbarer, transparenter, farbloser und elastischer Film.

### Beispiel 2: Herstellung einer Polyurethanharnstoff-Lösung in Ethanol (erfindungsgemäß)

300 g PolyTHF® 1000 wurden in einer Standard-Rührapparatur für eine Stunde bei 100°C im Membranpumpenvakuum entwässert und anschließend unter Stickstoff bei 80°C vorgelegt. Dann wurde bei 80°C innerhalb von 5 min 133,44 g Isophorondiisocyanat zugegeben und es wurde bei 110°C so lange gerührt (ca. 3 Stunden), bis der theoretische NCO-Wert unterschritten war. Das Prepolymer wurde auf 40°C abgekühlt und es wurde in 517 g Ethanol (vergällt mit MEK) gelöst und anschliessend wurde die Temperatur auf 16°C reduziert. Dann wurde eine Lösung aus 58,8 g Methylenbis(4-aminocyclohexan) und 222 g Ethanol (vergällt mit MEK) innerhalb von 30 min zudosiert, danach wurden weitere 410 g Ethanol zugesetzt. Es wurde weiter gerührt, bis IR-spektroskopisch keine freien Isocyanatgruppen mehr feststellbar waren.

Die erhaltene klare, lagerstabile Lösung hatte nachfolgende Eigenschaften:

| | |
|---|---|
| Feststoffgehalt: | 30,2 % |
| Viskosität (Viskosimeter, 23°C): | 85000 mPas |

Die Lösung wurde auf eine Glasplatte beschichtet (Rakel mit 210 micrometer Rakelspalt) und nach Trocknung bei Raumtemperatur ergab sich ein abziehbarer, transparenter, farbloser und elastischer Film. Die Quellung in Wasser bei 23 °C nach 16 h betrug 0%. Die mechanischen Eigenschaften des Films sind Tabelle 1 zu entnehmen:

**Tabelle 1:**

| **vor Behandlung mit Wasser** | **24 h Wasserlagerung bei 23 °C** |
|---|---|
| **SP/BS/BD** | **BS/BD** |
| 7,6 MPa / 55,0 MPa / 710 % | 39,0 MPa / 760 % |

### Beispiel 3: Koagulation der Polyurethanharnstoff-Lösungen aus Beispiel 1 und 2 in Wasser

Die Polyurethanharnstoff-Lösung aus Beispiel 1 und 2 koagulierten spontan, wenn sie bei Raumtemperatur in Wasser gegeben wurden.

Es wurde jeweils eine Probe der Lösungen aus Beispiel 1 und 2 mit Ethanol auf 15 Gew.-% Festgehalt verdünnt und bei Raumtemperatur ein Glasstab darin eingetaucht. Der Glasstab wurde anschließend in einen Behälter mit entmineralisiertem Wasser getaucht, wobei sich die Oberfläche der Polymerlösung sofort verfestigte. Ein analoges Experiment mit 80°C heissem Wasser zeigte analoge Ergebnisse, zusätzlich wurde die Polymerprobe sehr schnell trüb, was auf eine gute Koagulation hinweist.

### Beispiel 4: Herstellung einer Polyurethanharnstoff-Lösung in Ethanol (erfindungsgemäß)

211 g PolyTHF® 2000 und 52,7 g PolyTHF® 1000 wurden in einer Standard-Rührapparatur für eine Stunde bei 100°C im Membranpumpenvakuum entwässert, dann wurden 5,4 g Neopentylglykol zugesetzt und die Mischung wurde anschließend unter Stickstoff bei 80°C vorgelegt. Dann wurde bei 80°C innerhalb von 5 min 93,4 g Isophorondiisocyanat zugegeben und es wurde bei 110°C so lange gerührt (ca. 3 Stunden), bis der theoretische NCO-Wert unterschritten war. Das Prepolymer wurde auf 40°C abgekühlt und es wurde in 420 g Ethanol (vergällt mit Diethylphthalat) gelöst und anschliessend wurde die Temperatur auf 17°C reduziert. Dann wurde eine Lösung aus 35,3 g Methylenbis(4-aminocyclohexan) und 180 g Ethanol (vergällt mit Diethylphthalat) innerhalb von 30 min zudosiert. Es wurden weitere 0,67 g Methylenbis(4-aminocyclohexan) zugesetzt und dann weiter gerührt, bis IR-spektroskopisch keine freien Isocyanatgruppen mehr feststellbar waren.

Die erhaltene klare, lagerstabile Lösung hatte nachfolgende Eigenschaften:

| | |
|---|---|
| Feststoffgehalt: | 40,5 % |
| Viskosität (Viskosimeter, 23°C): | 7060 mPas |

Die Lösung wurde auf eine Glasplatte beschichtet (Rakel mit 210 micrometer Rakelspalt) und nach Trocknung bei Raumtemperatur ergab sich ein abziehbarer, transparenter, farbloser und elastischer Film. Die Quellung in Wasser bei 23 °C nach 16 h betrug 0%. Die mechanischen Eigenschaften des Films sind Tabelle 2 zu entnehmen:

**Tabelle 2:**

| **vor Behandlung mit Wasser** | **24 h Wasserlagerung bei 23 °C** |
|---|---|
| **SP/BS/BD** | **BS/BD** |
| 3,8 MPa / 17,3 MPa / 980 % | 14,6 MPa / 1030 % |

### Beispiel 5: Herstellung einer Polyurethan-Lösung in Ethanol (erfindungsgemäß)

160 g PolyTHF® 2000 und 40,0 g PolyTHF® 1000 wurden in einer Standard-Rührapparatur für eine Stunde bei 100°C im Membranpumpenvakuum entwässert und anschließend unter Stickstoff bei 80°C vorgelegt. Dann wurde bei 80°C innerhalb von 5 min 62,9 g Bis-(4,4'-isocyanatocyclo¬hexyl)¬methan (H12-MDI) zugegeben und es wurde bei 110°C so lange gerührt (ca. 3 Stunden), bis der theoretische NCO-Wert unterschritten war. Das Prepolymer wurde auf 40°C abgekühlt und es wurde in 595 g Ethanol gelöst und anschließend wurde die Temperatur auf 19°C reduziert. Dann wurde eine Lösung aus 20,2 g Methylenbis(4-aminocyclohexan) und 255 g Ethanol innerhalb von 30 min zudosiert. Es wurden weitere 4,5 g Methylenbis(4-aminocyclohexan) zugesetzt und dann weiter gerührt, bis IR-spektroskopisch keine freien Isocyanatgruppen mehr feststellbar waren.

Die erhaltene klare, lagerstabile Lösung hatte nachfolgende Eigenschaften:

| | |
|---|---|
| Feststoffgehalt: | 25,2 % |
| Viskosität (Viskosimeter, 23°C): | 3400 mPas |

Die Lösung wurde auf eine Glasplatte beschichtet (Rakel mit 210 micrometer Rakelspalt) und nach Trocknung bei Raumtemperatur ergab sich ein abziehbarer, transparenter, farbloser und elastischer Film. Die Quellung in Wasser bei 23 °C nach 16 h betrug 0%. Die mechanischen Eigenschaften des Films sind Tabelle 3 zu entnehmen:

**Tabelle 3:**

| **vor Behandlung mit Wasser** | **24 h Wasserlagerung bei 23 °C** |
|---|---|
| **SP/BS/BD** | **BS/BD** |
| 3,2 MPa / 16,7 MPa / 740 % | 13,5 MPa / 880 % |

### Beispiel 6: Herstellung einer Polyurethanharnstoff-Lösung in Ethanol (erfindungsgemäß)

1350 g PolyTHF® 1000 wurden in einer Standard-Rührapparatur für eine Stunde bei 100°C im Membranpumpenvakuum entwässert und anschließend unter Stickstoff bei 80°C vorgelegt. Dann wurde bei 80°C innerhalb von 5 min 600,5 g Isophorondiisocyanat zugegeben und es wurde bei 110°C so lange gerührt (ca. 3 Stunden), bis der theoretische NCO-Wert unterschritten war. Das Prepolymer wurde auf 40°C abgekühlt und es wurde in 2300 g Ethanol gelöst und anschließend wurde die Temperatur auf 16°C reduziert. Dann wurde eine Lösung aus 227 g Methylenbis(4-aminocyclohexan) und 980 g Ethanol innerhalb von 30 min zudosiert. Dann wurde weiter gerührt, bis IR-spektroskopisch keine freien Isocyanatgruppen mehr feststellbar waren.

Die erhaltene klare, lagerstabile Lösung hatte nachfolgende Eigenschaften:

| | |
|---|---|
| Feststoffgehalt: | 41,5 % |
| Viskosität (Viskosimeter, 23°C): | 46090 mPas |

Die Lösung wurde auf eine Glasplatte beschichtet (Rakel mit 210 micrometer Rakelspalt) und nach Trocknung bei Raumtemperatur ergab sich ein abziehbarer, transparenter, farbloser und elastischer Film. Die Quellung in Wasser bei 23 °C nach 16 h betrug 0%. Die mechanischen Eigenschaften des Films sind Tabelle 4 zu entnehmen:

**Tabelle 4:**

| **vor Behandlung mit Wasser** | **24 h Wasserlagerung bei 23 °C** |
|---|---|
| **SP/BS/BD** | **BS/BD** |
| 6,7 MPa / 52,5 MPa / 820 % | 32,7 MPa / 880 % |

### Beispiel 7: Lagerstabilität der Polyurethanharnstoff-Lösung aus Beispiel 6

Die Lösung aus Beispiel 6 wurde bei Raumtemperatur gelagert und im 1-Wochen-Rhytmus die Viskosität bestimm. Die Ergebnisse der Messungen sind Tabelle 5 zu entnehmen. Es zeigte sich, dass die erfindungsgemäße Polyurethanlösung lagerstabil ist und dabei die Viskosität weitgehende stabil bleibt.

**Tabelle 5:**

| **Zeitraum** | **Viskosität, mPa*s** | **Aussehen** |
|---|---|---|
| Nullwert | 46090 | Klar |
| nach 1 Woche | 46770 | Klar |
| nach 2 Wochen | 46900 | Klar |
| nach 3 Wochen | 48390 | Klar |
| nach 5 Wochen | 47530 | Klar |
| nach 2 Monaten | 47002 | Klar |
| nach 3 Monaten | 46070 | Klar |
| nach 4 Monaten | 46270 | Klar |
| nach 5 Monaten | 43260 | Klar |
| nach 6 Monaten | 43140 | Klar |

### Beispiel 8: Herstellung einer Polyurethanharnstoff-Lösung in Ethanol (erfindungsgemäß)

180 g PolyTHF® 2000, 45,0 g PolyTHF® 1000 und 25,5 g eines linearen, difunktionellen, amorphen Polyestersdiols auf Adipinsäure, 1,6-Hexandiol und Neopentlyglykol mit einer zahlenmittleren Molekulargewicht von 1700 g/mol wurden in einer Standard-Rührapparatur für eine Stunde bei 100°C im Membranpumpenvakuum entwässert und anschließend unter Stickstoff bei 80°C vorgelegt. Dann wurde bei 80°C innerhalb von 5 min 66,7 g Isophorondiisocyanat zugegeben und es wurde bei 110°C so lange gerührt (ca. 3 Stunden), bis der theoretische NCO-Wert unterschritten war. Das Prepolymer wurde auf 40°C abgekühlt und es wurde in 720 g Ethanol gelöst und anschließend wurde die Temperatur auf 18°C reduziert. Dann wurde eine Lösung aus 25,2 g Methyl-enbis(4-aminocyclohexan) und 310 g Ethanol innerhalb von 30 min zudosiert. Dann wurde weiter gerührt, bis IR-spektroskopisch keine freien Isocyanatgruppen mehr feststellbar waren.

Die erhaltene klare, lagerstabile Lösung hatte nachfolgende Eigenschaften:

| | |
|---|---|
| Feststoffgehalt: | 25,3 % |
| Viskosität (Viskosimeter, 23°C): | 560 mPas |

Die Lösung wurde auf eine Glasplatte beschichtet (Rakel mit 210 micrometer Rakelspalt) und nach Trocknung bei Raumtemperatur ergab sich ein abziehbarer, transparenter, farbloser und elastischer Film. Die Quellung in Wasser bei 23 °C nach 16 h betrug 0%. Die mechanischen Eigenschaften des Films sind Tabelle 6 zu entnehmen:

**Tabelle 6:**

| **vor Behandlung mit Wasser** | **24 h Wasserlagerung bei 23 °C** |
|---|---|
| **SP/BS/BD** | **BS/BD** |
| 2,7 MPa / 18,7 MPa / 1170 % | 12,1 MPa / 1340 % |

### Beispiel 9: Herstellung einer Polyurethanharnstoff-Lösung in iso-Propanol (erfindungsgemäß)

300 g PolyTHF® 1000 wurden in einer Standard-Rührapparatur für eine Stunde bei 100°C im Membranpumpenvakuum entwässert und anschließend unter Stickstoff bei 80°C vorgelegt. Dann wurde bei 80°C innerhalb von 5 min 133,4 g Isophorondiisocyanat zugegeben und es wurde bei 110°C so lange gerührt (ca. 3 Stunden), bis der theoretische NCO-Wert unterschritten war. Das Prepolymer wurde auf 40°C abgekühlt und es wurde in 510 g iso-Propanol gelöst. Dann wurde bei 40°C eine Lösung aus 50,40 g Methylenbis(4-aminocyclohexan) und 220 g Isoporpanol innerhalb von 30 min zudosiert. Es wurden weitere 720 g iso-Propanol zugesetzt und es wurde weiter gerührt, bis IR-spektroskopisch keine freien Isocyanatgruppen mehr feststellbar waren.

Die erhaltene klare, lagerstabile Lösung hatte nachfolgende Eigenschaften:

| | |
|---|---|
| Feststoffgehalt: | 25,6 % |
| Viskosität (Viskosimeter, 23°C): | 12500 mPas |

Die Lösung wurde auf eine Glasplatte beschichtet (Rakel mit 210 micrometer Rakelspalt) und nach Trocknung bei Raumtemperatur ergab sich ein abziehbarer, transparenter, farbloser und elastischer Film.

### Beispiel 10: Herstellung einer Polyurethanharnstoff-Lösung in Ethanol (erfindungsgemäß)

250 g PolyTHF® 2000 und 62,5 g PolyTHF® 1000 wurden in einer Standard-Rührapparatur für eine Stunde bei 100°C im Membranpumpenvakuum entwässert und anschließend unter Stickstoff bei 80°C vorgelegt. Dann wurde bei 80°C innerhalb von 5 min 83,4 g Isophorondiisocyanat zugegeben und es wurde bei 110°C so lange gerührt (ca. 3 Stunden), bis der theoretische NCO-Wert unterschritten war. Das Prepolymer wurde auf 40°C abgekühlt und es wurde in 425 g Ethanol gelöst und anschliessend wurde die Temperatur auf 18°C reduziert. Dann wurde eine Lösung aus 9,0 g Ethylendiamin und 180 g Ethanol innerhalb von 30 min zudosiert. Es wurden weitere 0,83 g Ethylendiamin zugesetzt und dann wurde weiter gerührt, bis IR-spektroskopisch keine freien Isocyanatgruppen mehr feststellbar waren.

Die erhaltene klare, lagerstabile Lösung hatte nachfolgende Eigenschaften:

| | |
|---|---|
| Feststoffgehalt: | 40,7 % |
| Viskosität (Viskosimeter, 23°C): | 34600 mPas |

Die Lösung wurde auf eine Glasplatte beschichtet (Rakel mit 210 micrometer Rakelspalt) und nach Trocknung bei Raumtemperatur ergab sich ein abziehbarer, transparenter, farbloser und elastischer Film.

### Beispiel 11: Herstellung einer Polyurethanharnstoff-Lösung in Ethanol (erfindungsgemäß)

226,2 g Polypropylenglykol mit einer zahlenmittleren Molekulargewicht von 2000 g/mol und62,5 g Polypropylenglykol mit einer zahlenmittleren Molekulargewicht von 1000 g/mol wurden in einer Standard-Rührapparatur für eine Stunde bei 100°C im Membranpumpenvakuum entwässert, die Mischung wurde anschließend unter Stickstoff bei 80°C vorgelegt. Dann wurde bei 80°C innerhalb von 5 min 83,4 g Isophorondiisocyanat zugegeben und es wurde bei 6 Stunden bei 120°C gerührt, bis der theoretische NCO-Wert unterschritten war. Das Prepolymer wurde auf 40°C abgekühlt und es wurde in 280 g Ethanol gelöst und anschließend wurde die Temperatur auf 18°C reduziert. Dann wurde eine Lösung aus 34,1 g Methylen-bis(4-aminocyclohexan) und 120 g Ethanol innerhalb von 30 min zudosiert. Es wurden weitere 4,5 g Methylenbis(4-aminocyclohexan) zugesetzt und dann weiter gerührt, bis IR-spektroskopisch keine freien Isocyanatgruppen mehr feststellbar waren.

Die erhaltene klare, lagerstabile Lösung hatte nachfolgende Eigenschaften:

| | |
|---|---|
| Feststoffgehalt: | 49,8 % |
| Viskosität (Viskosimeter, 23°C): | 1100 mPas |

Die Lösung wurde auf eine Glasplatte beschichtet (Rakel mit 210 micrometer Rakelspalt) und nach Trocknung bei Raumtemperatur ergab sich ein transparenter, farbloser Film, der beim Abziehen leicht einriss.

### Beispiel 12: Herstellung einer Polyurethanharnstoff-Lösung in Ethanol (erfindungsgemäß)

200 g PolyTHF® 2000 und 50,0 g PolyTHF® 1000 wurden in einer Standard-Rührapparatur für eine Stunde bei 100°C im Membranpumpenvakuum entwässert und anschließend unter Stickstoff bei 70°C vorgelegt. Dann wurde bei 70°C innerhalb von 5 min 50,4 g Hexamethylendiisocyanat zugegeben und es wurde bei 110°C so lange gerührt (ca. 3 Stunden), bis der theoretische NCO-Wert unterschritten war. Das Prepolymer wurde auf 40°C abgekühlt und es wurde in 340 g Ethanol gelöst und anschließend wurde die Temperatur auf 18°C reduziert. Aufgrund der hohen Viskosität wurden weitere 270 g Ethanol zugesetzt, dann wurde eine Lösung aus 25,2 g Methylenbis(4-aminocyclohexan) und 150 g Ethanol innerhalb von 30 min zudosiert. Dann wurde weiter gerührt, bis IR-spektroskopisch keine freien Isocyanatgruppen mehr feststellbar waren.

Die erhaltene klare, lagerstabile Lösung hatte nachfolgende Eigenschaften:

| | |
|---|---|
| Feststoffgehalt: | 30,1 % |
| Viskosität (Viskosimeter, 23°C): | 15500 mPas |

Die Lösung wurde auf eine Glasplatte beschichtet (Rakel mit 210 micrometer Rakelspalt) und nach Trocknung bei Raumtemperatur ergab sich ein abziehbarer, transparenter, farbloser und elastischer Film.

### Beispiel 13: Herstellung einer Polyurethanharnstoff-Lösung in Ethanol

300 g PolyTHF® 1000 wurden in einer Standard-Rührapparatur für eine Stunde bei 100°C im Membranpumpenvakuum entwässert und anschließend unter Stickstoff bei 80°C vorgelegt. Dann wurde bei 80°C innerhalb von 5 min 133,44 g Isophorondiisocyanat zugegeben und es wurde bei 110°C so lange gerührt (ca. 3 Stunden), bis der theoretische NCO-Wert unterschritten war. Das Prepolymer wurde auf 40°C abgekühlt und es wurde in 498 g Ethanol (vergällt mit MEK) gelöst und anschliessend wurde die Temperatur auf 16°C reduziert. Dann wurde eine Lösung aus 40,9 g Isophorondiamin und 213 g Ethanol (vergällt mit MEK) innerhalb von 30 min zudosiert, danach wurden weitere 7,15 g Ethanol Isophorondiamin zugesetzt. Es wurde weiter gerührt, bis IR-spektroskopisch keine freien Isocyanatgruppen mehr feststellbar waren.

Die erhaltene klare, lagerstabile Lösung hatte nachfolgende Eigenschaften:

| | |
|---|---|
| Feststoffgehalt: | 40,8 % |
| Viskosität (Viskosimeter, 23°C): | 3850 mPas |

Die Lösung wurde auf eine Glasplatte beschichtet (Rakel mit 210 micrometer Rakelspalt) und nach Trocknung bei Raumtemperatur ergab sich ein abziehbarer, transparenter, farbloser und elastischer Film. Bei der Filmbildung ergaben sich jedoch Verlaufsschwierigkeiten.

### Vergleichsbeispiel 1: Versuch zur Herstellung einer Polyurethanharnstoff-Lösung in Ethanol

100 g PolyTHF® 2000, 25,0 g PolyTHF® 1000 und 127,5 g eines linearen, difunktionellen, amorphen Polyestersdiols auf Adipinsäure, 1,6-Hexandiol und Neopentlyglykol mit einer zahlenmittleren Molekulargewicht von 1700 g/mol wurden in einer Standard-Rührapparatur für eine Stunde bei 100°C im Membranpumpenvakuum entwässert und anschließend unter Stickstoff bei 80°C vorgelegt. Dann wurde bei 80°C innerhalb von 5 min 66,7 g Isophorondiisocyanat zugegeben und es wurde bei 110°C so lange gerührt (ca. 3 Stunden), bis der theoretische NCO-Wert unterschritten war. Das Prepolymer wurde auf 40°C abgekühlt und es wurde in 720 g Ethanol gelöst, wobei sich das Produkt nicht vollständig löste und anschließend wurde die Temperatur auf 17°C reduziert. Dann wurde eine Lösung aus 25,2 g Methylenbis(4-aminocyclohexan) und 310 g Ethanol innerhalb von 30 min zudosiert, dabei entstand eine weisse Trübung. Dann wurde weiter gerührt, wobei sich keine stabile Lösung bildete sondern sich ein 2 phasiges Gemisch ergab aus dem sich die feste Phase absetzte.

### Vergleichsbeispiel 2: Versuch zur Herstellung einer Polyurethanharnstoff-Lösung in Ethanol

200 g eines linearen, difunktionellen, Polycarbonatdiols auf Basis von 1,6-Hexandiol, mit einer zahlenmittleren Molekulargewicht von 2000 g/mol und 50 g eines linearen, difunktionellen, Polycarbonatdiols auf Basis von 1,6-Hexandiol, mit einer zahlenmittleren Molekulargewicht von 1000 g/mol wurden in einer Standard-Rührapparatur für eine Stunde bei 100°C im Membranpumpenvakuum entwässert und anschließend unter Stickstoff bei 80°C vorgelegt. Dann wurde bei 80°C innerhalb von 5 min 66,7 g Isophorondiisocyanat zugegeben und es wurde bei 110°C so lange gerührt (ca. 3 Stunden), bis der theoretische NCO-Wert unterschritten war. Das Prepolymer wurde auf 40°C abgekühlt und es wurde in 720 g Ethanol gelöst, wobei sich das Produkt nicht vollständig löste und anschließend wurde die Temperatur auf 17°C reduziert. Dann wurde eine Lösung aus 25,2 g Methylenbis(4-aminocyclohexan) und 310 g Ethanol innerhalb von 30 min zudosiert, dabei entstand eine zweiphasige Mischung. Dann wurde weiter gerührt, wobei sich keine stabile Lösung bildete sondern sich ein 2 phasiges Gemisch ergab aus dem sich die feste Phase absetzte.

### Vergleichsbeispiel 3: Versuch zur Herstellung einer Polyurethanharnstoff-Lösung in Ethanol

225 g PolyTHF® 1000 wurden in einer Standard-Rührapparatur für eine Stunde bei 100°C im Membranpumpenvakuum entwässert und anschließend unter Stickstoff bei 80°C vorgelegt. Dann wurde bei 80°C innerhalb von 5 min 78,3 g Desmodur T 80 (Toluylendiisocyanat) zugegeben und es wurde bei 110°C so lange gerührt (ca. 1 Stunde), bis der theoretische NCO-Wert unterschritten war. Das Prepolymer wurde auf 40°C abgekühlt und es wurde in 570 g Ethanol (vergällt mit MEK) gelöst und anschliessend wurde die Temperatur auf 16°C reduziert. Dann wurde eine Lösung aus 44,1 g Methylenbis(4-aminocyclohexan) und 222 g Ethanol (vergällt mit MEK) innerhalb von 30 min zudosiert, danach wurden weitere 410 g Ethanol zugesetzt. Es wurde weiter gerührt, bis IR-spektroskopisch keine freien Isocyanatgruppen mehr feststellbar waren.

Die erhaltene klare, lagerstabile Lösung hatte nachfolgende Eigenschaften:

| | |
|---|---|
| Feststoffgehalt: | 28,6 % |
| Viskosität (Viskosimeter, 23°C): | 30 mPas |

Die Lösung wurde auf eine Glasplatte beschichtet (Rakel mit 210 micrometer Rakelspalt) und nach Trocknung bei Raumtemperatur ergab sich kein elastischer Film sondern ein klebriger Rückstand.

## Patentansprüche

1. Verfahren zur Beschichtung von Textilien und/oder Leder, **dadurch gekennzeichnet, dass** wenigstens ein Polyurethanharnstoff, welcher gelöst ist in einem Lösemittel oder Lösemittelgemisch eingesetzt wird, wobei das Lösemittel ausschließlich aus einem oder mehreren monohydroxyfunktionellen Alkoholen besteht oder ein Lösemittelgemisch bestehend aus ausschließlich organischen Lösemitteln, welches > 80 Gew.-%, bezogen auf die Gesamtmasse des Lösemittelgemisches, an wenigstens einem monohydroxyfunktionellen Alkohol enthält, verwendet wird und wobei der Polyurethanharnstoff aufgebaut ist aus
a) wenigstens einem araliphatischen, aliphatischen und/oder cycloaliphatischen Diisocyanat,
b) wenigstens einem Polyetherpolyol mit einem zahlenmittleren Molekulargewicht Mn ≥ 400 und ≤ 6000 g/mol, bestimmt mittels GPC in THF bei 23 °C, und einer mittleren Hydroxylfunktionalität von ≥ 1,5 und ≤ 4,
c) wenigstens einer aminofunktionellen Verbindung, die mindestens zwei isocyanatreaktive Aminogruppen aufweist,
d) gegebenenfalls wenigstens einem Alkohol, der mindestens zwei Hydroxylgruppen und eine Molmasse ≥ 60 und ≤ 399 g/mol aufweist,
e) gegebenenfalls wenigstens einer Verbindung die eine gegenüber Isocyanatgruppen reaktive Gruppe aufweist,
f) gegebenenfalls ≤ 20 Gew.-%, bezogen auf die Gesamtmasse des Polyurethanharnstoffs, an wenigstens einem Polyole mit einem zahlenmittleren Molekulargewicht Mn ≥ 500 und ≤ 6000 g/mol und einer mittleren Hydroxylfunktionalität von ≥ 1,5 und ≤ 4, welches unterschiedlich ist von b).

2. Verfahren gemäß Anspruch 1, **dadurch gekennzeichnet, dass** die Komponente b) ausgewählt ist aus Poly(tetramethylenglykol)polyetherpolyolen.

3. Verfahren gemäß Anspruch 1 oder 2, **dadurch gekennzeichnet, dass** die Komponente a) ausgewählt ist aus aliphatischen und/oder cycloaliphatischen Diisocyanaten, welche mindestens eine Isocyanatgruppe aufweisen, die an ein sekundäres und/oder tertiäres C-Atom gebunden ist.

4. Verfahren gemäß einem der Ansprüche 1 bis 3, **dadurch gekennzeichnet, dass** die Komponente a) ausgewählt ist aus IPDI und/oder H12-MDI.

5. Verfahren gemäß einem der Ansprüche 1 bis 4, **dadurch gekennzeichnet, dass** die Komponente c) ausgewählt ist aus Aminen, die mindestens zwei isocyanatreaktive Aminogruppen aufweisen, die an primäre und/oder sekundäre C-Atome gebunden sind.

6. Verfahren gemäß einem der Ansprüche 1 bis 5, **dadurch gekennzeichnet, dass** die Komponente c) ausgewählt ist aus symmetrisch aufgebauten Diaminen.

7. Verfahren gemäß einem der Ansprüche 1 bis 6, **dadurch gekennzeichnet, dass** die Komponente c) ausgewählt ist aus Ethylendiamin und/oder H12-MDA.

8. Verfahren gemäß einem der Ansprüche 1 bis 7, **dadurch gekennzeichnet, dass** das Lösemittelgemisch ≥ 99 Gew.-% an monohydroxyfunktionellen Alkoholen enthält.

9. Verfahren gemäß einem der Ansprüche 1 bis 8, **dadurch gekennzeichnet, dass** der monohydroxyfunktionelle Alkohol Ethanol und/oder iso-Propanol ist.

10. Verfahren gemäß einem der Ansprüche 1 bis 9, **dadurch gekennzeichnet, dass** der Polyurethanharnstoff hergestellt wird, indem die Komponenten a) und b) sowie gegebenenfalls d) und f) in einem ersten Schritt zu einem NCO-terminierten Präpolymer umgesetzt und dann dieses in einem weiteren Schritt mit der Komponente c) sowie gegebenenfalls den Komponenten d) und e) umgesetzt wird.

11. Verfahren gemäß Anspruch 10, **dadurch gekennzeichnet, dass** das NCO-terminierte Präpolymer vorgelegt und die Komponente c), sowie gegebenenfalls die Komponenten d) und e) zugegeben werden.

12. Verfahren gemäß Anspruch 10 oder 11, **dadurch gekennzeichnet, dass** das molare Verhältnis der isocyanatreaktiven Gruppen der Komponente c) zu den freien NCO-Gruppen des Präpolymers ≥ 70 und ≤ 95% ist.

13. Verfahren gemäß einem der Ansprüche 1 bis 12, **dadurch gekennzeichnet, dass** der gelöste Polyurethanharnstoff in einem ersten Schritt auf ein textiles Material und/oder Leder aufgetragen und in einem darauf folgenden Schritt der Polyurethanharnstoff durch Kontakt mit Wasser auf und/oder in dem textilen Gewebe und/oder Leder koaguliert wird.

14. Textil- und/oder Lederbeschichtung erhältlich nach einem Verfahren gemäß einem der Ansprüche 1 bis 13.

15. Polyurethanharnstoff, welcher gelöst ist in einem Lösemittel oder Lösemittelgemisch, wobei das Lösemittel ausschließlich aus einem oder mehreren monohydroxyfunktionellen Alkoholen besteht oder ein Lösemittelgemisch bestehend aus ausschließlich organischen Lösemitteln, welches ≥ 92 Gew.-%, bezogen auf die Gesamtmasse des Lösemittelgemisches, an wenigstens einem monohydroxyfunktionellen Alkohol enthält, verwendet wird, **dadurch gekennzeichnet, dass** der Polyurethanharnstoff aufgebaut ist aus
a) wenigstens einem araliphatischen, aliphatischen und/oder cycloaliphatischen Diisocyanat,
b) wenigstens einem Polyetherpolyol mit einem zahlenmittleren Molekulargewicht Mn ≥ 400 und ≤ 6000 g/mol, bestimmt mittels GPC in THF bei 23 °C, und einer mittleren Hydroxylfunktionalität von ≥ 1,5 und ≤ 4,
c2) wenigstens einer aminofunktionellen Verbindung, ausgewählt aus symmetrischen Diaminen, die mindestens zwei isocyanatreaktive Aminogruppen aufweisen, die an primäre und/oder sekundäre C-Atome gebunden sind,
d) gegebenenfalls wenigstens einem Alkohol, der mindestens zwei Hydroxylgruppen und eine Molmasse ≥ 60 und ≤ 399 g/mol aufweist,
e) gegebenenfalls wenigstens einer Verbindung die eine gegenüber Isocyanatgruppen reaktive Gruppe aufweist,
f) gegebenenfalls ≤ 20 Gew.-%, bezogen auf die Gesamtmasse des Polyurethanharnstoffs, an wenigstens einem Polyole mit einem zahlenmittleren Molekulargewicht Mn ≥ 500 und ≤ 6000 g/mol und einer mittleren Hydroxylfunktionalität von ≥ 1,5 und ≤ 4, welches unterschiedlich ist von b).

16. Polyurethanharnstoff gemäß Anspruch 15, **dadurch gekennzeichnet, dass** die Komponente c) ausgewählt ist aus Ethylendiamin und/oder H12-MDA.

17. Verwendung des Polyurethanharnstoffes gemäß einem der Ansprüche 15 bis 16 zur Beschichtung von Substraten.

18. Verwendung des Polyurethanharnstoffes gemäß einem der Ansprüche 15 bis 16 zur Herstellung von freien Filmen.

## Claims

1. Process for coating textiles and/or leather, **characterized in that** at least one polyurethaneurea dissolved in a solvent or solvent mixture is used, where the solvent consists exclusively of one or more monohydroxy-functional alcohols or a solvent mixture consisting of exclusively organic solvents containing > 80% by weight, based on the total mass of the solvent mixture, of at least one monohydroxy-functional alcohol is used, and where the polyurethaneurea is formed from
a) at least one araliphatic, aliphatic and/or cycloaliphatic diisocyanate,
b) at least one polyether polyol having a number-average molecular weight Mn of ≥ 400 and ≤ 6000 g/mol, determined by means of GPC in THF at 23°C, and a mean hydroxyl functionality of ≥ 1.5 and ≤ 4,
c) at least one amino-functional compound having at least two isocyanate-reactive amino groups,
d) optionally at least one alcohol having at least two hydroxyl groups and a molar mass of ≥ 60 and ≤ 399 g/mol,
e) optionally at least one compound having a group reactive toward isocyanate groups,
f) optionally ≤ 20% by weight, based on the total mass of the polyurethaneurea, of at least one different polyol than b) having a number-average molecular weight Mn of ≥ 500 and ≤ 6000 g/mol and a mean hydroxyl functionality of ≥ 1.5 and ≤ 4.

2. Process according to Claim 1, **characterized in that** component b) is selected from poly(tetramethylene glycol) polyether polyols.

3. Process according to Claim 1 or 2, **characterized in that** component a) is selected from aliphatic and/or cycloaliphatic diisocyanates having at least one isocyanate group bonded to a secondary and/or tertiary carbon atom.

4. Process according to any of Claims 1 to 3, **characterized in that** component a) is selected from IPDI and/or H12-MDI.

5. Process according to any of Claims 1 to 4, **characterized in that** component c) is selected from amines having at least two isocyanate-reactive amino groups bonded to primary and/or secondary carbon atoms.

6. Process according to any of Claims 1 to 5, **characterized in that** component c) is selected from diamines of symmetric structure.

7. Process according to any of Claims 1 to 6, **characterized in that** component c) is selected from ethylenediamine and/or H12-MDA.

8. Process according to any of Claims 1 to 7, **characterized in that** the solvent mixture contains ≥ 99% by weight of monohydroxy-functional alcohols.

9. Process according to any of Claims 1 to 8, **characterized in that** the monohydroxy-functional alcohol is ethanol and/or isopropanol.

10. Process according to any of Claims 1 to 9, **characterized in that** the polyurethaneurea is prepared by converting components a) and b) and optionally d) and f) to an NCO-terminated prepolymer in a first step and then reacting the latter with component c) and optionally components d) and e) in a further step.

11. Process according to Claim 10, **characterized in that** the NCO-terminated prepolymer is initially charged and component c) and optionally components d) and e) are added.

12. Process according to Claim 10 or 11, **characterized in that** the molar ratio of isocyanate-reactive groups of component c) to the free NCO groups of the prepolymer is ≥ 70% and ≤ 95%.

13. Process according to any of Claims 1 to 12, **characterized in that** the dissolved polyurethaneurea is applied to a textile material and/or leather in a first step and the polyurethaneurea is coagulated upon and/or within the textile fabric and/or leather by contact with water in a subsequent step.

14. Textile and/or leather coating obtainable by a process according to any of Claims 1 to 13.

15. Polyurethaneurea dissolved in a solvent or solvent mixture, where the solvent consists exclusively of one or more monohydroxy-functional alcohols or a solvent mixture consisting of exclusively organic solvents containing ≥ 92% by weight, based on the total mass of the solvent mixture, of at least one monohydroxy-functional alcohol is used, **characterized in that** the polyurethaneurea is formed from
a) at least one araliphatic, aliphatic and/or cycloaliphatic diisocyanate,
b) at least one polyether polyol having a number-average molecular weight Mn of ≥ 400 and ≤ 6000 g/mol, determined by means of GPC in THF at 23°C, and a mean hydroxyl functionality of ≥ 1.5 and ≤ 4,
c2) at least one amino-functional compound selected from symmetric diamines having at least two isocyanate-reactive amino groups bonded to primary and/or secondary carbon atoms,
d) optionally at least one alcohol having at least two hydroxyl groups and a molar mass of ≥ 60 and ≤ 399 g/mol,
e) optionally at least one compound having a group reactive toward isocyanate groups,
f) optionally ≤ 20% by weight, based on the total mass of the polyurethaneurea, of at least one different polyol than b) having a number-average molecular weight Mn of ≥ 500 and ≤ 6000 g/mol and a mean hydroxyl functionality of ≥ 1.5 and ≤ 4.

16. Polyurethaneurea according to Claim 15, **characterized in that** component c) is selected from ethylenediamine and/or H12-MDA.

17. Use of the polyurethaneurea according to either of Claims 15 and 16 for coating of substrates.

18. Use of the polyurethaneurea according to either of Claims 15 and 16 for production of free films.

## Revendications

1. Procédé de revêtement de textiles et/ou de cuir, **caractérisé en ce qu'**au moins un polyuréthane-urée, qui est dissous dans un solvant ou un mélange de solvants, est utilisé, le solvant étant constitué exclusivement par un ou plusieurs alcools monohydroxyfonctionnels ou un mélange de solvants constitué par exclusivement des solvants organiques, qui contient > 80 % en poids, par rapport à la masse totale du mélange de solvants, d'au moins un alcool monohydroxyfonctionnel, étant utilisé, et le polyuréthane-urée étant formé à partir de :
a) au moins un diisocyanate araliphatique, aliphatique et/ou cycloaliphatique,
b) au moins un polyéther-polyol ayant un poids moléculaire moyen en nombre Mn ≥ 400 et ≤ 6 000 g/mol, déterminé par CPG dans du THF à 23 °C, et une fonctionnalité hydroxyle moyenne ≥ 1,5 et ≤ 4,
c) au moins un composé aminofonctionnel, qui comprend au moins deux groupes amino réactifs avec les isocyanates,
d) éventuellement au moins un alcool, qui comprend au moins deux groupes hydroxyle et présente une masse molaire ≥ 60 et ≤ 399 g/mol,
e) éventuellement au moins un composé qui comprend un groupe réactif avec les groupes isocyanate,
f) éventuellement ≤ 20 % en poids, par rapport à la masse totale du polyuréthane-urée, d'au moins un polyol ayant un poids moléculaire moyen en nombre Mn ≥ 500 et ≤ 6 000 g/mol et une fonctionnalité hydroxyle moyenne ≥ 1,5 et ≤ 4, qui est différent de b).

2. Procédé selon la revendication 1, **caractérisé en ce que** le composant b) est choisi parmi les poly(tétraméthylène glycol)-polyéther-polyols.

3. Procédé selon la revendication 1 ou 2, **caractérisé en ce que** le composant a) est choisi parmi les diisocyanates aliphatiques et/ou cycloaliphatiques, qui comprennent au moins un groupe isocyanate, qui est relié à un atome C secondaire et/ou tertiaire.

4. Procédé selon l'une quelconque des revendications 1 à 3, **caractérisé en ce que** le composant a) est choisi parmi l'IPDI et/ou l'H12-MDI.

5. Procédé selon l'une quelconque des revendications 1 à 4, **caractérisé en ce que** le composant c) est choisi parmi les amines, qui comprennent au moins deux groupes amino réactifs avec les isocyanates, qui sont reliés à des atomes C primaires et/ou secondaires.

6. Procédé selon l'une quelconque des revendications 1 à 5, **caractérisé en ce que** le composant c) est choisi parmi les diamines formées symétriquement.

7. Procédé selon l'une quelconque des revendications 1 à 6, **caractérisé en ce que** le composant c) est choisi parmi l'éthylène-diamine et/ou l'H12-MDA.

8. Procédé selon l'une quelconque des revendications 1 à 7, **caractérisé en ce que** le mélange de solvants contient ≥ 99 % en poids d'alcools monohydroxyfonctionnels.

9. Procédé selon l'une quelconque des revendications 1 à 8, **caractérisé en ce que** l'alcool monohydroxyfonctionnel est l'éthanol et/ou l'isopropanol.

10. Procédé selon l'une quelconque des revendications 1 à 9, **caractérisé en ce que** le polyuréthane-urée est fabriqué par mise en réaction des composants a) et b), ainsi qu'éventuellement d) et f) lors d'une première étape pour former un prépolymère à terminaison NCO, puis mise en réaction de celui-ci lors d'une étape ultérieure avec le composant c), ainsi qu'éventuellement les composants d) et e).

11. Procédé selon la revendication 10, **caractérisé en ce que** le prépolymère à terminaison NCO est chargé initialement et le composant c), ainsi qu'éventuellement les composants d) et e), sont ajoutés.

12. Procédé selon la revendication 10 ou 11, **caractérisé en ce que** le rapport molaire entre les groupes réactifs avec les isocyanates du composant c) et les groupes NCO libres du prépolymère est ≥ 70 et ≤ 95 %.

13. Procédé selon l'une quelconque des revendications 1 à 12, **caractérisé en ce que** le polyuréthane-urée dissous est appliqué lors d'une première étape sur un matériau textile et/ou du cuir et, lors d'une étape ultérieure, le polyuréthane-urée est coagulé par mise en contact avec de l'eau sur et/ou dans le tissu textile et/ou le cuir.

14. Revêtement de textile et/ou de cuir pouvant être obtenu par un procédé selon l'une quelconque des revendications 1 à 13.

15. Polyuréthane-urée, qui est dissous dans un solvant ou un mélange de solvants, le solvant étant constitué exclusivement par un ou plusieurs alcools monohydroxyfonctionnels ou un mélange de solvants constitué par exclusivement des solvants organiques, qui contient ≥ 92 % en poids, par rapport à la masse totale du mélange de solvants, d'au moins un alcool monohydroxyfonctionnel, étant utilisé, **caractérisé en ce que** le polyuréthane-urée est formé à partir de :
a) au moins un diisocyanate araliphatique, aliphatique et/ou cycloaliphatique,
b) au moins un polyéther-polyol ayant un poids moléculaire moyen en nombre Mn ≥ 400 et ≤ 6 000 g/mol, déterminé par CPG dans du THF à 23 °C, et une fonctionnalité hydroxyle moyenne ≥ 1,5 et ≤ 4,
c2) au moins un composé aminofonctionnel, choisi parmi les diamines symétriques, qui comprend au moins deux groupes amino réactifs avec les isocyanates, qui sont reliés à des atomes C primaires et/ou secondaires,
d) éventuellement au moins un alcool, qui comprend au moins deux groupes hydroxyle et présente une masse molaire ≥ 60 et ≤ 399 g/mol,
e) éventuellement au moins un composé qui comprend un groupe réactif avec les groupes isocyanate,
f) éventuellement ≤ 20 % en poids, par rapport à la masse totale du polyuréthane-urée, d'au moins un polyol ayant un poids moléculaire moyen en nombre Mn ≥ 500 et ≤ 6 000 g/mol et une fonctionnalité hydroxyle moyenne ≥ 1,5 et ≤ 4, qui est différent de b).

16. Polyuréthane-urée selon la revendication 15, **caractérisé en ce que** le composant c) est choisi parmi l'éthylène-diamine et/ou l'H12-MDA.

17. Utilisation du polyuréthane-urée selon l'une quelconque des revendications 15 à 16 pour le revêtement de substrats.

18. Utilisation du polyuréthane-urée selon l'une quelconque des revendications 15 à 16 pour la fabrication de films libres.
